(19)

Europäisches Patentamt

European Patent Office

Office européen des brevets

(11) **EP 4 443 339 A1**

(12) **EUROPEAN PATENT APPLICATION**
published in accordance with Art. 153(4) EPC

(43) Date of publication:
**09.10.2024 Bulletin 2024/41**

(21) Application number: **22922194.0**

(22) Date of filing: **22.12.2022**

(51) International Patent Classification (IPC):
**G06N 3/09** (2023.01)    **G06N 3/04** (2023.01)

(52) Cooperative Patent Classification (CPC):
**G06N 3/04; G06N 3/09; G06N 20/00**

(86) International application number:
**PCT/JP2022/047490**

(87) International publication number:
**WO 2023/140044 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.01.2022 JP 2022007218**

(71) Applicant: **OMRON Corporation
Kyoto 600-8530 (JP)**

(72) Inventors:
• **YANAGI, Rintaro**
**Tokyo 113-0033 (JP)**
• **HASHIMOTO, Atsushi**
**Tokyo 113-0033 (JP)**
• **CHIBA, Naoya**
**Tokyo 113-0033 (JP)**
• **USHIKU, Yoshitaka**
**Tokyo 113-0033 (JP)**

(74) Representative: **Isarpatent
Patent- und Rechtsanwälte
Barth Hassa Peckmann & Partner mbB
Friedrichstraße 31
80801 München (DE)**

(54) **MODEL GENERATION METHOD, MODEL GENERATION DEVICE, INFERENCE PROGRAM, AND INFERENCE DEVICE**

(57) The model generation device performs machine learning for an inference model that includes a preprocessing module and a graph inference module. The preprocessing module includes a feature extractor and a selection module. The feature extractor calculates a feature value of each element belonging to one of a plurality of sets included in the input graph. The selection module selects one or more edges extending from each element as a starting point based on the calculated feature value of each element, and generates graph information, indicating the calculated feature value of each element and an edge selection result for each set. The graph inference module is configured to be differentiable and infers a solution to a task for the input graph from the generated graph information for each set.

Fig. 2

EP 4 443 339 A1

**Description**

TECHNICAL FIELD

The present invention relates to a model generation method, a model generation device, an inference program, and an inference device.

BACKGROUND ART

At the time of solving various inference tasks such as matching and route search, graphs may be used to represent various types of information. A graph basically includes elements (vertices/nodes) and edges. The edges represent the relationships between the elements. Depending on the inference task, graphs with various structures can be used, such as directed graphs, bipartite graphs, vertex feature graphs, and hypergraphs.

As an example, in the case of solving a stable matching problem, a bipartite graph can be used. The stable matching problem is a two-sided market assignment problem, such as matching between a job applicant and an employer. The bipartite graph is a graph configured such that a set of elements (vertices) is divided into two subsets, and there are no edges between the elements within each subset. Each subset may be associated with a party to which a matching target belongs, and an element (vertex) in each subset may be associated with the matching target (e.g., job applicant/employer). Each target may have a preference degree (e.g., preference order) for a target belonging to another party, and an edge may represent the preference degree.

Matching can be represented by an edge set made up of edges that show combinations of elements belonging to one subset and elements belonging to the other subset and are assigned so as not to share elements. When there is a combination of elements with higher preference degrees than a combination of edges belonging to the edge set that forms the matching, the edge representing the former combination blocks the matching (i.e., this indicates that there is another matching that is more preferable than the matching represented by the edge set). In one example of the stable matching problem, a combination of elements is searched for in a way that avoids such a blocking pair while satisfying an arbitrary measure (e.g., fairness).

As another example, a vertex feature graph can be used in the case of inferring a correspondence relationship between a plurality of pieces of point cloud data (two-dimensional/three-dimensional models, etc.) (e.g., specifying the same elements). The vertex feature graph is a graph configured such that each of elements (vertices) has an attribute. The points constituting the point cloud data correspond to the elements, respectively. The inference of a correspondence relationship can correspond to, for example, point cloud alignment, optical flow estimation, stereo matching, and the like.

As a typical example, a situation is assumed where the point cloud data represents a two-dimensional or three-dimensional model, and the same points are to be identified between two pieces of point cloud data (i.e., a combination of points having a correspondence relationship is identified). In this case, basically, candidates for the point having a correspondence relationship with each point included in one point cloud data are all the points in the other point cloud data. An example of the inference task includes identifying a point having a correspondence relationship among the candidates (i.e., estimating a combination of points having a correspondence relationship among the plurality of candidates).

In a case where the relationship between the elements is unknown, such as a case where the correspondence relationship between the pieces of point cloud data is inferred, the graph (in the above example, the plurality of pieces of point cloud data) provided before the inference may not be provided with edges. In this case, at the time of solving the inference task, it may be considered that all candidates for combinations of potential elements to have correspondence relationships are linked with edges.

Conventionally, various algorithms have been developed to solve tasks represented by such graphs. The Gale-Sharpley (GS) algorithm proposed in Non-Patent Document 1 is known as an example of a classical method for solving the stable matching problem. However, a method using such a specific algorithm is not versatile because the method cannot be used when the task content is changed even slightly, and the generation cost for a solver is high due to many parts configured manually.

Therefore, in recent years, as a general-purpose method for solving a task represented by a graph, a method using a machine learning model, such as a neural network, has been studied. For example, Non-Patent Document 2 proposes solving a stable matching problem using a five-layer neural network. Non-Patent Document 3 proposes a method for solving a task represented by a graph using WeaveNet that includes a machine learning model. According to the methods using the machine learning models as described above, by preparing learning data corresponding to a task, it is possible to generate a learned model (solver) that has acquired the ability to solve the task. This enables the enhancement of the versatility of the generated model and a reduction in the generation cost for the solver.

PRIOR ART DOCUMENT

NON-PATENT DOCUMENT

Non-Patent Document 1: David Gale, Lloyd S Shapley, "College admissions and the stability of marriage", The American Mathematical Monthly, 69(1):9-15, 1962.
Non-Patent Document 2: Shira Li, "Deep Learning for Two-Sided Matching Markets", PhD thesis, Harvard University, 2019.
Non-Patent Document 3: Shusaku Sone, Atsushi Hashimoto, Jiaxin Ma, Rintaro Yanagi, Naoya Chiba, Yoshitaka Ushiku, "WeaveNet: A Differentiable Solver for Non-linear Assignment Problems", [online], [searched on January 11, 2022], Internet <URL: https://openreview.net/forum?id=ktHKpsbsxx>

SUMMARY OF THE INVENTION

PROBLEMS TO BE SOLVED BY THE INVENTION

The present inventors have found that there are the following problems with the methods proposed in Non-Patent Documents 2 and 3 for solving inference tasks for data with a graph structure by using machine learning models. That is, as the number of elements increases, the number of edges to be referenced in the inference process increases. As an example, in the above stable matching problem, when the number of elements in one subset is N, the number of elements in the other subset is M, and preference degrees are provided to directed edges between all the elements, the number of referenced edges is 2MN. As another example, in the case of solving the task of identifying the same points between the two pieces of point cloud data, the number of points (elements) included in each piece of point cloud data is N, and when a combination of the same points is identified among all the candidates (brute force), the number of edges (candidates) to be referenced is $N^2$. This may increase the computational load for solving the inference task and worsen process efficiency.

The present invention has been made in view of such circumstances, and an object of the present invention is to provide a technique for improving process efficiency at the time of solving an inference task for data with a graph structure by using a machine learning model.

MEANS FOR SOLVING THE PROBLEM

To solve the problems described above, the present invention employs the following configuration.

That is, a model generation method according to one aspect of the present disclosure is an information processing method in which a computer executes: a step of acquiring a plurality of training graphs; and a step of performing machine learning for an inference model using the plurality of acquired training graphs. The inference model includes a preprocessing module and a graph inference module. The preprocessing module includes a feature extractor and a selection module. The feature extractor is configured to calculate a feature value of each of elements belonging to one of a plurality of sets included in the input graph. The selection module is configured to select one or more edges, extending from each of the elements as a starting point, based on the calculated feature value of each of the elements, and generate, for each of sets, graph information indicating the calculated feature value of each of the elements and the selected one or more edges. The graph inference module is configured to be differentiable and to infer a solution to a task for the input graph from the generated graph information for each of the sets. The machine learning includes training the inference model so that an inference result matches a correct answer for the task for each of the training graphs, the inference result being obtained from the graph inference module by inputting each of the training graphs to the preprocessing module as the input graph.

According to the model generation method of this configuration, it is possible to generate a trained inference model including the preprocessing module. According to the preprocessing module, it is possible to calculate the feature value of each of elements in the input graph and select the edge (combination of elements) to be referenced at the time of solving the inference task, based on the calculated feature value of each of elements. That is, even if the number of elements included in the data increases, the number of edges to be referenced in the inference process can be reduced by the edge selection by the preprocessing module. Therefore, it is possible to improve process efficiency at the time of solving the inference task for the data with the graph structure by using the trained inference model.

In the model generation method according to the aspect, the selection of the one or more edges based on the feature value of each of the elements may include calculating a likelihood between each of the elements and each of candidate elements that is a candidate for a destination to which an edge from each of the elements is connected, and

selecting the one or more edges according to the calculated likelihood. According to this configuration, it is possible to appropriately select an edge to be referenced at the time of solving the inference task based on the likelihood. This can improve the efficiency and accuracy of the inference process.

In the model generation method according to the aspect, each of the training graphs may be a directed bipartite graph, and a plurality of elements included in the directed bipartite graph may be divided to belong to one of two subsets. The plurality of sets in the input graph may be formed of the two subsets in the directed bipartite graph. The calculation of the feature value of each of the elements may include calculating the feature value of each of the elements from a feature of an edge extending from each of the elements in the directed bipartite graph as a starting point. According to this configuration, it is possible to improve the efficiency of the process of solving the inference task (inferring the solution) in a situation where the inference task is represented by the directed bipartite graph.

In the model generation method according to the above aspect, the task may be a matching task between two parties and may be to determine optimal pairing between targets belonging to the respective parties. The two subsets in the directed bipartite graph may correspond to the two parties in the matching task. The element belonging to each of the subsets in the directed bipartite graph may correspond one-to-one to the target belonging to each of the parties. According to this configuration, it is possible to improve the efficiency of the process of inferring the solution for the two-sided matching represented by the directed bipartite graph.

In the model generation method according to the aspect, each of the training graphs may be an undirected bipartite graph, and a plurality of elements included in the undirected bipartite graph may be divided to belong to one of two subsets. The plurality of sets in the input graph may be formed of the two subsets in the undirected bipartite graph. The calculation of the feature value of each of the elements may include calculating the feature value of each of the elements from the feature of the edge connected to each of the elements in the undirected bipartite graph. According to this configuration, it is possible to improve the efficiency of the process of solving the inference task in a situation where the inference task is represented by the undirected bipartite graph.

In the model generation method according to the above aspect, the task may be a matching task between two parties and may be to determine optimal pairing between targets belonging to the respective parties. The two subsets in the undirected bipartite graph may correspond to the two parties in the matching task. The element belonging to each of the subsets in the undirected bipartite graph may correspond one-to-one to the target belonging to each of the parties. According to this configuration, it is possible to improve the efficiency of the process of inferring the solution for one-sided matching represented by the undirected bipartite graph.

In the model generation method according to the aspect, each of the training graphs may be a directed graph. The plurality of sets in the input graph may be formed of a first set and a second set. An element belonging to the first set may correspond to a starting point of a directed edge that constitutes the directed graph, and an element belonging to the second set may correspond to an end point of the directed edge. The calculation of the feature value of each of the elements may include calculating a feature value of the element belonging to the first set from a feature of a directed edge that flows out from the element belonging to the first set, and calculating a feature value of the element belonging to the second set from a feature of a directed edge that flows into the element belonging to the second set. According to this configuration, it is possible to improve the efficiency of the process of solving the inference task in a situation where the inference task is represented by the directed graph.

In the model generation method according to the aspect, each of the training graphs may be an undirected graph. The plurality of sets in the input graph may be formed of a first set and a second set. Each of elements belonging to the first set or the second set may correspond one-to-one to each of elements constituting the undirected graph. The calculation of the feature value of each of the elements may include calculating the feature value of each of the elements from a feature of an edge connected to each of the elements. According to this configuration, it is possible to improve the efficiency of the process of solving the inference task in a situation where the inference task is represented by the undirected graph.

In the model generation method according to the aspect, each of the training graphs may be configured such that each of elements included in each of the training graphs has an attribute. The calculation of the feature value of each of the elements may include calculating the feature value of each of the elements from the attribute of each of the elements. According to this configuration, it is possible to improve the efficiency of the process of solving the inference task in a situation where the inference task is represented by the vertex feature graph having the feature (attribute) at the vertex (element). Note that the task may be to estimate a relationship between elements belonging to the respective sets. The estimation of the relationship between the elements may be, for example, point cloud alignment, optical flow estimation, stereo matching, and the like. As a result, it is possible to improve the efficiency of the process of estimating the relationship between the elements.

In the model generation method according to the aspect, each of the training graphs may be configured such that each of elements included in each of the training graphs has an attribute. A relationship between each of the elements included in each of the training graphs may be defined. The calculation of the feature value of each of the elements may include calculating the feature value of each of the elements from information indicating the attribute and the relationship of each of the elements. According to this configuration, it is possible to improve the efficiency of the process of solving the inference task in a situation where the inference task is represented by the vertex feature graph to which the relationship between the vertices is provided in advance.

In the model generation method according to the aspect, each of the training graphs may be a hypergraph, and a plurality of elements included in the hypergraph may be divided to belong to any one of three or more subsets. The plurality of sets in the input graph may be formed of the three or more subsets in the hypergraph. The calculation of the feature value of each of the elements may include calculating the feature value of each of the elements from a feature of an edge connected to each of the elements in the hypergraph. According to this configuration, it is possible to improve the efficiency of the process of solving the inference task in a situation where the inference task is represented by the hypergraph.

The mode of the present disclosure is not limited to the above model generation method. One aspect of the present disclosure may be an inference method including a step of inferring a solution to a task for a graph using a trained inference model generated by the model generation method according to any one of the above aspects. For example, an inference method according to one aspect of the present disclosure is an information processing method in which a computer executes: a step of acquiring a target graph; a step of inferring a solution to a task for the acquired target graph by using an inference model trained through machine learning; and a step of outputting information regarding a result of inferring the solution to the task. The inference model is configured in the same manner as described above. The inference of the solution to the task for the target graph includes inputting the target graph as the input graph to the preprocessing module and obtaining a result of inferring the solution to the task from the graph inference module. According to this configuration, it is possible to improve the efficiency of processing at the time of inferring the solution to the task by the trained inference model. Note that the inference method may be considered as, for example, a matching method, a prediction method, or the like depending on the type of the task in the application situation. The same applies to other aspects (e.g., an inference device, etc.).

Furthermore, as another aspect of each of the model generation method and the inference method according to the aspects described above, one aspect of the present disclosure may be an information processing device (model generation device, inference device) that implements all or a part of each of the configurations described above, may be a program, or may be a storage medium that stores such a program and is readable by a computer, another device, a machine, or the like. Here, the computer-readable storage medium is a medium that accumulates information such as a program by electrical, magnetic, optical, mechanical, or chemical action. Furthermore, one aspect of the present disclosure may be an inference system including a model generation device and an inference device.

For example, a model generation device according to one aspect of the present disclosure includes an acquisition unit configured to acquire a plurality of training graphs, and a learning processing unit configured to perform machine learning for an inference model using the plurality of training graphs acquired. For example, a model generation program according to an aspect of the present disclosure is a program for causing a computer to execute: a step of acquiring a plurality of training graphs; and a step of performing machine learning for an inference model using the plurality of acquired training graphs. The inference model is configured in the same manner as described above. The machine learning includes training the inference model so that an inference result matches a correct answer for the task for each of the training graphs, the inference result being obtained from the graph inference module by inputting each of the training graphs to the preprocessing module as the input graph.

For example, an inference device according to one aspect of the present disclosure includes an acquisition unit configured to acquire a target graph, an inference unit configured to infer a solution to a task for the acquired target graph by using an inference model trained through machine learning, and an output unit configured to output information regarding a result of inferring the solution to the task. For example, an inference program according to an aspect of the present disclosure is a program for causing a computer to execute the steps of: acquiring a target graph; inferring a solution to a task for the acquired target graph by using an inference model trained through machine learning; and outputting information regarding a result of inferring the solution to the task. The inference model is configured in the same manner as described above. The inference of the solution to the task for the target graph includes inputting the target graph as the input graph to the preprocessing module and obtaining a result of inferring the solution to the task from the graph inference module.

EFFECT OF THE INVENTION

According to the present invention, it is possible to improve process efficiency at the time of solving an inference task for data with a graph structure by using a machine learning model.

BRIEF DESCRIPTION OF THE DRAWINGS

Fig. 1 schematically illustrates an example of a situation to which the present invention is applied.

Fig. 2 schematically illustrates an example of a configuration of an inference model according to the embodiment.

Fig. 3 schematically illustrates an example of a calculation process of a preprocessing module according to the embodiment.

Fig. 4 schematically illustrates an example of the hardware configuration of a model generation device according to the embodiment.

Fig. 5 schematically illustrates an example of the hardware configuration of the inference device according to the embodiment.

Fig. 6 schematically illustrates an example of the software configuration of the model generation device according to the embodiment.

Fig. 7 schematically illustrates an example of the software configuration of the inference device according to the embodiment.

Fig. 8 is a flowchart illustrating an example of the processing procedure for the model generation device according to the embodiment.

Fig. 9 is a flowchart illustrating an example of the processing procedure for the inference device according to the embodiment.

Fig. 10 schematically illustrates an example of another situation (a situation where a task is represented by a directed bipartite graph) to which the present invention is applied.

Fig. 11 schematically illustrates an example of another situation (a situation where a task is represented by an undirected bipartite graph) to which the present invention is applied.

Fig. 12 schematically illustrates an example of another situation (a situation where a task is represented by a general directed graph) to which the present invention is applied.

Fig. 13 schematically illustrates an example of another situation (a situation where a task is represented by a general undirected graph) to which the present invention is applied.

Fig. 14 schematically illustrates an example of another situation (a situation where a task of inferring a relationship between elements is represented by a vertex feature graph) to which the present invention is applied.

Fig. 15 schematically illustrates an example of another situation (a situation where a task is represented by a vertex feature graph to which a relationship between elements is provided) to which the present invention is applied.

Fig. 16 schematically illustrates an example of another situation (a situation where a task is represented in a hypergraph) to which the present invention is applied.

Fig. 17 illustrates experimental results (inference accuracy within set tolerance) of examples and comparative examples for a first data set.

Fig. 18 illustrates experimental results (inference accuracy within set tolerance) of examples and comparative examples for a second data set.

Fig. 19A illustrates an inference result of the comparative example with respect to a first sample of the second data set in the case of the tolerance set to 0.00.

Fig. 19B illustrates an inference result of the example with respect to the first sample of the second data set in the case of the tolerance set to 0.00.

Fig. 19C illustrates an inference result of the comparative example with respect to the first sample of the second data set in the case of the tolerance set to 0.06.

Fig. 19D illustrates an inference result of the example with respect to the first sample of the second data set in the case of the tolerance set to 0.06.

Fig. 20A illustrates an inference result of the comparative example with respect to a second sample of the second data set in the case of the tolerance set to 0.00.

Fig. 20B illustrates an inference result of the example with respect to the second sample of the second data set in the case of the tolerance set to 0.00.

Fig. 20C illustrates an inference result of the comparative example with respect to the second sample of the second data set in the case of the tolerance set to 0.06.

Fig. 20D illustrates an inference result of the example with respect to the second sample of the second data set in the case of the tolerance set to 0.06.

MODE FOR CARRYING OUT THE INVENTION

An embodiment according to one aspect of the present invention (hereinafter also referred to as "the embodiment") will be described below with reference to the drawings. However, the embodiment described below is merely an example of the present invention in all respects. It goes without saying that various improvements and modifications can be made without departing from the scope of the present invention. That is, in practicing the present invention, a specific configuration according to the embodiment may be employed as appropriate. Although data appearing in the embodiment is described in a natural language, the data is designated, more specifically, in a pseudo-language, a command, a parameter, a machine language, or the like that can be recognized by a computer.

§1 Application Example

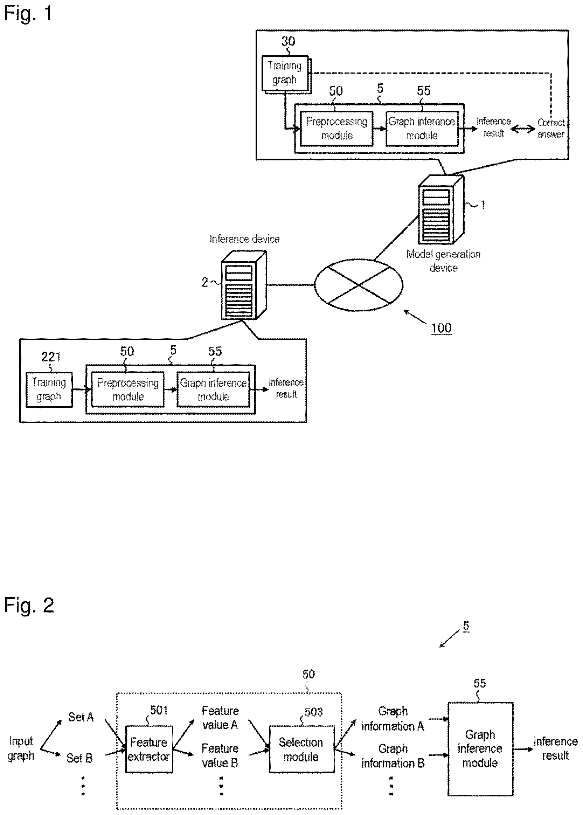

Fig. 1 schematically illustrates an example of a situation to which the present invention is applied. As illustrated in Fig. 1, an inference system 100 according to the embodiment includes a model generation device 1 and an inference device 2.

(Model generation device)

The model generation device 1 according to the embodiment is one or more computers configured to generate a trained inference model 5 by performing machine learning. Specifically, the model generation device 1 acquires a plurality of training graphs 30. The type of each training graph 30 may be selected as appropriate according to the task-solving ability to be acquired by the inference model 5. Each training graph 30 may be, for example, a directed bipartite graph, an undirected bipartite graph, a general directed graph, a general undirected graph, a vertex feature graph, a hypergraph, or the like. The data format of each training graph 30 may be selected as appropriate according to the embodiment. Each training graph 30 may include, for example, image data, point cloud data, and other data representing a graph structure. The model generation device 1 performs machine learning for the inference model 5 using the plurality of acquired training graphs 30. This enables the generation of the trained inference model 5.

(Inference Device)

Meanwhile, the inference device 2 according to the embodiment is one or more computers configured to infer a solution to a task for a graph using the trained inference model 5. Specifically, the inference device 2 acquires a target graph 221. The target graph 221 is a graph for which a solution to a task is to be inferred, and the type thereof may be selected as appropriate according to the acquired ability of the trained inference model 5, similarly to the training graph 30. Also, the data format of the target graph 221 may be selected as appropriate according to the embodiment, similarly to the training graph 30. The target graph 221 may be, for example, a directed bipartite graph, an undirected bipartite graph, a general directed graph, a general undirected graph, a vertex feature graph, a hypergraph, or the like. The target graph 221 may include, for example, image data, point cloud data, and the like. The inference device 2 infers the solution to the task for the acquired target graph 221 using the inference model 5 trained through machine learning. Then, the inference device 2 outputs information regarding the result of inferring the solution to the task.

(Inference Model)

Fig. 2 schematically illustrates an example of the configuration of the inference model 5 according to the embodiment. As illustrated in Figs. 1 and 2, the inference model 5 according to the embodiment includes a preprocessing module 50 and a graph inference module 55. The preprocessing module 50 includes a feature extractor 501 and a selection module 503.

The feature extractor 501 according to the embodiment is configured to calculate a feature value of each element belonging to one of a plurality of sets included in an input graph. In one example, the feature extractor 501 may be configured to calculate, for each set, a feature value of each element from a feature related to each element belonging to each set in the input graph. The element corresponds to a vertex (node) of the graph. The feature related to each element may be, for example, a feature of an edge connected to each element, a feature (attribute) of each element itself, or the like.

The feature extractor 501 may be formed of a machine learning model including one or more parameters for executing arithmetic processing to extract a feature value, the parameters being adjusted through machine learning. The feature extractor 501 may be represented by, for example, a functional expression. The feature extractor 501 may thus be configured to be differentiable. Note that the type of the machine learning model constituting the feature extractor 501 is not particularly limited, and may be selected as appropriate according to the embodiment. As the machine learning model constituting the feature extractor 501, for example, a neural network or the like may be used. The structure of the neural network may be determined as appropriate according to the embodiment. In the case of using the neural network for the feature extractor 501, a weight of coupling between nodes (neurons), a threshold value of each node, and the like are examples of parameters.

The number of feature extractors 501 is not particularly limited, and may be determined as appropriate according to the embodiment. In one example, as illustrated in Fig. 2, the feature extractor 501 may be used in common for at least some of a plurality of sets included in the input graph. In a simple case, the feature extractor 501 may be used in common for all sets. In this case, the preprocessing module 50 may include a single feature extractor 501. In another example, the feature extractors 501 may be prepared separately for each set. In this case, the preprocessing module 50 may include a plurality of feature extractors 501.

The selection module 503 according to the embodiment is configured to select one or more edges extending from each element as a starting point to another element in another set, based on the feature value of each element calculated for each set by the feature extractor 501. Moreover, the selection module 503 is configured to generate, for each set, graph information indicating the calculated feature value of each element and one or more edges selected for each element. In the example of Fig. 2, the input graph includes a set A and a set B, and the feature extractor 501 calculates a feature value (A, B) of each element in each set (A, B). The selection module 503 selects, for each element, one or more edges extending from each element as a starting point based on the feature value (A, B) of each element in each set (A, B), and derives graph information (A, B) of each set (A, B). As long as the graph information is configured to indicate the feature value of each element and the edge selection result, the data format thereof is not particularly limited. In one example, the graph information for each set may be derived by combining (e.g., through concatenation operation) information indicating the feature value of each element and the edge selection result.

In one example of edge selection, the selection module 503 may select one or more edges extending from each element as a starting point regardless of whether or not edges are provided between the elements in advance. That is, as a result of the edge selection by the selection module 503, an edge may link elements to which no edge is provided in the input graph. For example, a candidate (hereinafter also referred to as "candidate element") of an element to which an edge is extended from a target element belonging to a target set may be all elements belonging to a set other than the target set. The selection module 503 may be configured to select a candidate combined with and linked to the target element. (i.e., select a combination of elements to be linked with an edge between the sets) from among all the elements. However, the form of the edge selection is not limited to such an example. In another example, the selection module 503 may select one or more edges from a pre-provided edge.

The method of selecting an edge based on the feature value is not particularly limited as long as an edge useful for task inference can be selected from the feature value of each element, and may be determined as appropriate according to the embodiment. In one example, the selection of one or more edges based on the feature value of each element may include calculating a likelihood between each element and each candidate element, which is a candidate for designation to which the edge from each element is connected, from the feature value of each element, and selecting one or more edges according to the likelihood calculated for each candidate element. As a result, it is possible to appropriately select an edge to be referenced at the time of solving the inference task. Note that the likelihood indicates a degree to which the combination of each element and each candidate element is related to the inference of the task. The likelihood may be referred to as other names, such as similarity.

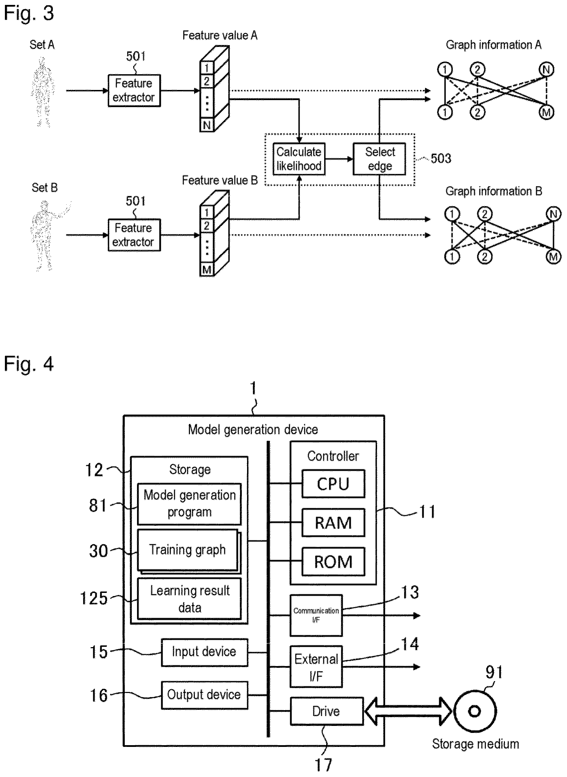

Fig. 3 schematically illustrates an example of the calculation process of the preprocessing module 50 according to the embodiment. In Fig. 3, a situation is assumed where two pieces of point cloud data (set A, set B) each representing a human body model are provided as the input graph, and a combination of corresponding points (elements) is to be identified between the pieces of point cloud data. It is assumed that the number of points (elements) of the point cloud data of the set A is N, and the number of points (elements) of the point cloud data of the set B is M.

In the example of Fig. 3, first, the preprocessing module 50 calculates the feature value (A, B) of each element in each set (A, B) using the feature extractor 501. The feature value (A, B) of each element may be calculated from the attribute value (e.g., coordinates, etc.) of the point of the point cloud data. Next, the preprocessing module 50 calculates a likelihood between each element in each set (A, B) and each candidate element in another set (B, A) using the selection module 503. The method of calculating the likelihood may be selected as appropriate according to the embodiment. In the embodiment, the likelihood of each element may be calculated by a predetermined operation. In one example, the selection module 503 may calculate the likelihood with the following arithmetic expression of Equation 1.

[Equation 1]

$$ s_{n,m}^{A} = \frac{1}{\left\| f_n^A - f_m^B \right\|_2} \quad \text{... (Equation 1)} $$

$s_{n,m}^{A}$ indicates the likelihood between each element in the set A and each candidate element in the set B. $f_n^A$ indicates the feature value A of each element in the set A. $f_m^B$ indicates the feature value B of each element in the set B. The likelihood between each element in the set B and each candidate element in the set A may be similarly calculated. However, the method of calculating the likelihood is not limited to such an example. In another example, the selection module 503 may calculate the likelihood with the inner product of the feature value (A, B) of each element.

Subsequently, the preprocessing module 50 selects one or more edges for each element in each set (A, B) according to the calculated likelihood using the selection module 503. The method of selecting edges may be selected as appropriate according to the embodiment. In one example, the selection module 503 may select k edges for each element. In this case, as a method of selecting k edges, any algorithm may be used, such as the k-nearest neighbors algorithm. In another example, the maximum number K of edges to be selected for each set (A, B) may be determined, and the selection module 503 may select at least one or more (a variable number of) edges for each element. For example, when a candidate with a high likelihood is prioritized, the selection module 503 may select candidates with the highest likelihood (N candidates for the set A) for each element, and then select the second and subsequent candidates (K-N candidates) in descending order of likelihood.

Then, using the selection module 503, the preprocessing module 50 generates graph information (A, B) of each set (A, B) indicating the calculated feature value (A, B) of each element and one or more edges selected for each element. The graph information A may be appropriately configured to indicate the feature value A of each element in the set A and the edge selection result for each element in the set A, and the graph information B may be appropriately configured to indicate the feature value B of each element in the set B and the edge selection result for each element in the set B. Note that the edge selection result can depend on, for example, the type of graph, the edge selection method, and the like. In the example of Fig. 3, a solid line indicates the selected edge, and a dotted line indicates the unselected edge. For example, for a first element in set A, the edges to both a first element and an Mth element in set B have been selected. In contrast, for the first element in the set B, the edge to the first element in the set A has not been selected, but the edge to a second element in the set A has been selected. As described above, in some cases, the edge selection result may be different between the set A and the set B.

Returning to Figs. 1 and 2, the graph inference module 55 is configured to be differentiable and to infer the solution to the task for the input graph from the generated graph information for each set. The graph inference module 55 may include a machine learning model including one or more parameters for executing arithmetic processing to infer a solution to a task from graph information, the parameters being adjusted through machine learning. The type of the machine learning model constituting the graph inference module 55 is not particularly limited, and may be selected as appropriate according to the embodiment. As the machine learning model constituting the graph inference module 55, for example, a neural network or the like may be used. The structure of the neural network may be determined as appropriate according to the embodiment. In the case of using the neural network for the graph inference module 55, a weight of coupling between nodes, a threshold value of each node, and the like are examples of parameters.

In one example, the graph inference module 55 may include a crossattention layer, proposed in Reference Document 1 (Jiaming Sun, Zehong Shen, Yuang Wang, Hujun Bao, Xiaowei Zhou, "LoFTR: Detector-Free Local Feature Matching with Transformers" [online], [searched on January 11, 2022], Internet <URL: https://arxiv.org/abs/2104.00680>).

In another example, the graph inference module 55 may include WeaveNet proposed in Non-Patent Document 3. In this case, the graph inference module 55 may include a feature weaving network and an inference unit. The feature weaving network may be configured to receive an input of graph information and output feature information by comprising a plurality of feature weaving layers. The inference unit may be configured to infer the solution to the task from the feature information output by the feature weaving network. Each feature weaving layer may accept L (L+1) input tensor inputs (L is a natural number equal to or greater than 2). An ith input tensor among the L input tensors may be configured such that ith vertices belonging to an ith set (an ith element belonging to the ith set) are arranged as elements on a first axis. Vertices belonging to a (j-1)th set are arranged as elements while circulating from the ith set as a starting point on a jth axis extending from a second axis to an Lth axis. Furthermore, feature values related to edges flowing out from the ith vertex belonging to the ith set to combinations of vertices belonging to the other sets are arranged on a (L+1)th axis. Each feature weaving layer may include an encoder. In each feature weaving layer, for the ith input tensor from the first to the Lth input tensors, the (L+1)th axis of each of (L-1) input tensors other than the ith input tensor is fixed. The axes other than the (L+1)th axis of each of the other input tensors are circulated to align with each axis of the ith input tensor, and the feature values of each element in the ith input tensor and each of the circulated other input tensors are coupled, thereby generating L (L+1)th-order coupling tensors. Furthermore, each of the generated L coupling tensors is divided into elements in the first axis, the L coupling tensors are input to an encoder, and an operation of the encoder is performed, thereby generating L (L+1)th-order output tensors that correspond to the L input tensors, respectively. The encoder may be configured to derive a relative feature value of each element from the input feature values of all the elements. The first feature weaving layer of the plurality of feature weaving layers may be configured to receive L input tensors directly from the graphical information for each set or indirectly via a predetermined operation. The feature information may include L output tensors output from the last feature weaving layer of the plurality of feature weaving layers. By employing WeaveNet for the graph inference module 55, even for a complicated task, the accuracy of inferring the solution to the task can be improved by deepening the hierarchy of the feature weaving network.

The machine learning in the model generation device 1 includes training the inference model 5 so that an inference result matches the correct answer (true value) of the task for each training graph 30, the inference result being obtained from the graph inference module 55 by inputting each training graph 30 to the preprocessing module 50 as the input graph. During this machine learning, the inference model 5 may be consistently trained from the graph inference module 55 to the feature extractor 501. Meanwhile, the inference of the solution to the task for the target graph 221 in the inference device 2 includes inputting the target graph 221 to the preprocessing module 50 as the input graph and obtaining a result of inferring the solution to the task from the graph inference module 55.

(Feature)

As described above, in the inference model 5 according to the embodiment, the preprocessing module 50 can calculate the feature value of each element in the input graph and select the edge to be referenced at the time of solving the inference task, based on the calculated feature value of each element. As a result, even if the number of elements included in the data increases, the number of edges to be referenced in the inference process can be reduced by the edge selection by the preprocessing module 50. Therefore, according to the embodiment, it is possible to improve process efficiency at the time of solving an inference task for data with a graph structure. According to the model generation device 1 of the embodiment, it is possible to generate the trained inference model 5 capable of efficiently executing the inference process. According to the inference device 2 of the embodiment, it is possible to efficiently solve the inference task for the target graph 221 by using the generated trained inference model 5.

In a simple manner, a method of selecting an edge on a rule basis to improve the efficiency of inference process can be considered. However, in this method, since the rule for selecting an edge is not necessarily optimal for the inference process, the performance of the inference process is limited by the rule for selecting an edge, which may cause a deterioration in accuracy. In contrast, in the embodiment, in the machine learning for the inference model 5, the graph inference module 55 to the feature extractor 501 can be consistently set as a training target. This can optimize the performance of the feature extractor 501 for the inference process, resulting in the prevention of deterioration in inference accuracy. Therefore, according to the embodiment, it is possible to improve the efficiency of the inference process while ensuring the accuracy of the inference.

In addition, when there is diversity in the variations of the feature values, the diversity may cause a deterioration in inference accuracy. In contrast, in the embodiment, the edge selection by the selection module 503 can reduce the diversity in the variations of the feature values processed by the graph inference module 55. As a result, improved inference accuracy can be expected.

§2 Configuration Example

[Hardware configuration]

<Model generation device>

Fig. 4 schematically illustrates an example of the hardware configuration of the model generation device 1 according to the embodiment. As illustrated in Fig. 4, the model generation device 1 according to the embodiment is a computer to which a controller 11, a storage 12, a communication interface 13, an external interface 14, an input device 15, an output device 16, and a drive 17 are connected electrically.

The controller 11 includes a central processing unit (CPU) that is a hardware processor, a random-access memory (RAM), a read-only memory (ROM), and the like, and is configured to execute information processing based on a program and various types of data. The controller 11 (CPU) is an example of a processor resource. The storage 12 is an example of a memory resource, and includes, for example, a hard disk drive, a solid-state drive, or the like. In the embodiment, the storage 12 stores various types of information such as a model generation program 81, a plurality of training graphs 30, and learning result data 125.

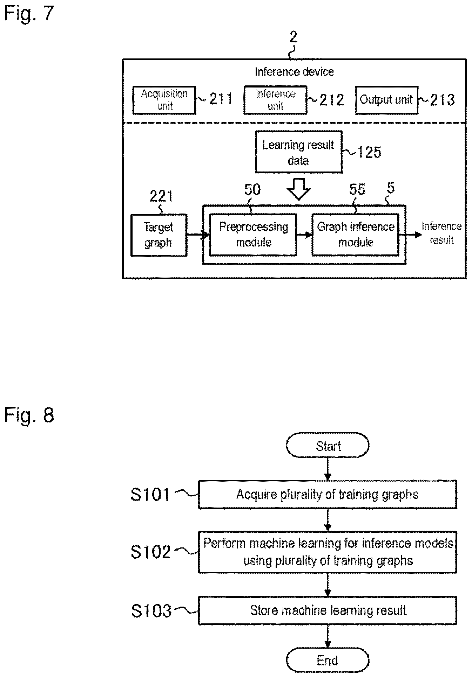

The model generation program 81 is a program for causing the model generation device 1 to execute information processing (Fig. 8) of machine learning, to be described later, for generating the trained inference model 5. The model generation program 81 includes a series of commands for the information processing. The plurality of training graphs 30 are used for machine learning for the inference model 5. The learning result data 125 indicates information regarding the trained inference model 5 generated by performing machine learning. In the embodiment, the learning result data 125 is generated as a result of executing the model generation program 81.

The communication interface 13 is, for example, a wired local area network (LAN) module, a wireless LAN module, or the like, and is an interface for performing wired or wireless communication via a network. The model generation device 1 can execute data communication with another information processing device via a network using the communication interface 13. The external interface 14 is, for example, a universal serial bus (USB) port, a dedicated port, or the like, and is an interface for connecting to an external device. Any type and number of external interfaces 14 may be selected. The training graph 30 may be obtained by, for example, a sensor such as a camera. Alternatively, the training graph 30 may be generated by another computer. In these cases, the model generation device 1 may be connected to the sensor or another computer via at least one of the communication interface 13 or the external interface 14.

The input device 15 is, for example, a device for performing input such as a mouse and a keyboard. The output device 16 is, for example, a device for performing output, such as a display and a speaker. An operator can operate the model generation device 1 by using the input device 15 and the output device 16. The training graph 30 may be obtained by input via the input device 15. The input device 15 and the output device 16 may be integrally formed, for example, by a touch panel display or the like.

The drive 17 is, for example, a compact disc (CD) drive, a digital versatile disc (DVD) drive, or the like, and is a drive device for reading various types of information such as a program stored in a storage medium 91. The storage medium 91 is a medium that accumulates information such as a stored program by electrical, magnetic, optical, mechanical, or chemical action so that a computer, other devices, a machine, or the like can read various types of information such as the program. At least one of the model generation program 81 or the plurality of training graphs 30 may be stored in the storage medium 91. The model generation device 1 may acquire at least one of the model generation program 81 or the plurality of training graphs 30 from the storage medium 91. Here, Fig. 4 illustrates a disc-type storage medium such as a CD or a DVD as an example of the storage medium 91. However, the type of the storage medium 91 is not limited to the disk type, and may be other than the disk type. Examples of the storage medium other than the disc type include a semiconductor memory such as a flash memory. Any type of the drive 17 may be selected according to the type of the storage medium 91.

Regarding a specific hardware configuration of the model generation device 1, components can be omitted, replaced, and added as appropriate according to the embodiment. For example, the controller 11 may include a plurality of hardware processors. The hardware processor may include a microprocessor, a field-programmable gate array (FPGA), a digital signal processor (DSP), or the like. The storage 12 may be formed of the RAM and the ROM included in the controller 11. At least one of the communication interface 13, the external interface 14, the input device 15, the output device 16, and the drive 17 may be omitted. The model generation device 1 may include a plurality of computers. In this case, the hardware configurations of the respective computers may or may not be the same. In addition, the model generation device 1 may be a general-purpose server device, personal computer (PC), or the like, in addition to an information processing device designed exclusively for a service to be provided.

<Inference device>

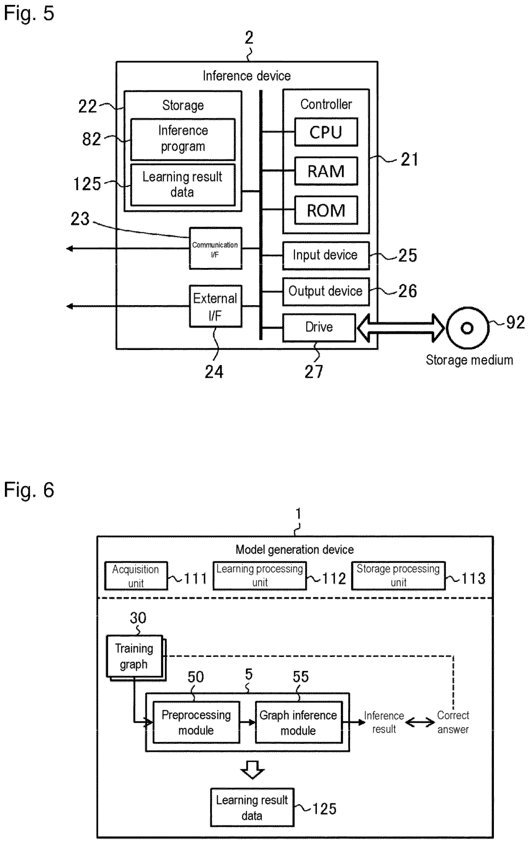

Fig. 5 schematically illustrates an example of the hardware configuration of the inference device 2 according to the embodiment. As illustrated in Fig. 5, the inference device 2 according to the embodiment is a computer to which a controller 21, a storage 22, a communication interface 23, an external interface 24, an input device 25, an output device 26, and a drive 27 are connected electrically.

The controller 21 to the drive 27 of the inference device 2 and a storage medium 92 may be configured similarly to the controller 11 to the drive 17 of the model generation device 1 and the storage medium 91, respectively. The controller 21 includes a CPU, a RAM, a ROM, and the like, which are hardware processors, and is configured to execute various types of information processing based on a program and data. The storage 22 includes, for example, a hard disk drive, a solid-state drive, or the like. In the embodiment, the storage 22 stores various types of information such as inference program 82 and the learning result data 125.

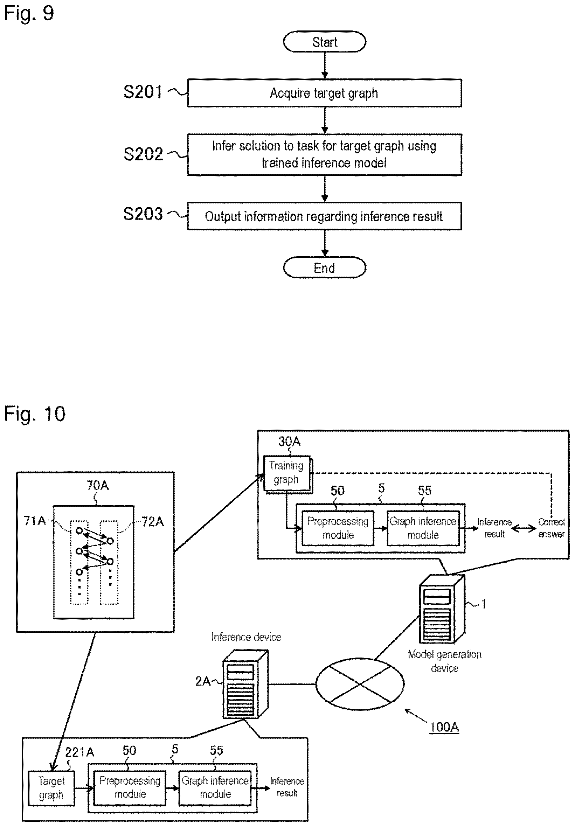

The inference program 82 is a program for causing the inference device 2 to execute information processing (Fig. 9), to be described later, to execute an inference task using the trained inference model 5. The inference program 82 includes a series of commands of the information processing. At least one of the inference program 82 or the learning result data 125 may be stored in the storage medium 92. Furthermore, the inference device 2 may acquire at least one of the inference program 82 or the learning result data 125 from the storage medium 92.

Similarly to the training graph 30, the target graph 221 may be obtained by, for example, a sensor such as a camera. Alternatively, the target graph 221 may be generated by another computer. In these cases, the inference device 2 may be connected to the sensor or another computer via at least one of the communication interface 23 or the external interface 24. The target graph 221 may be obtained by input via the input device 25.

Regarding a specific hardware configuration of the inference device 2, components can be omitted, replaced, and added as appropriate according to the embodiment. For example, the controller 21 may include a plurality of hardware processors. The hardware processor may include a microprocessor, an FPGA, a DSP, or the like. The storage 22 may be formed of the RAM and the ROM included in the controller 21. At least one of the communication interface 23, the external interface 24, the input device 25, the output device 26, and the drive 27 may be omitted. The inference device 2 may include a plurality of computers. In this case, the hardware configurations of the respective computers may or may not be the same. Furthermore, the inference device 2 may be a general-purpose server device, a general-purpose PC, a tablet PC, a terminal device, or the like, in addition to an information processing device designed exclusively for a service to be provided.

[Software Configuration]

<Model generation device>

Fig. 6 schematically illustrates an example of the software configuration of the model generation device 1 according to the embodiment. The controller 11 of the model generation device 1 loads the model generation program 81 stored in the storage 12 into the RAM. Then, the controller 11 interprets and executes a command, included in the model generation program 81 loaded into the RAM, using the CPU to control each component. As a result, as illustrated in Fig. 6, the model generation device 1 according to the embodiment operates as a computer including an acquisition unit 111, a machine learning processing unit 112, and a storage processing unit 113 as software modules. That is, in the embodiment, each software module of the model generation device 1 is implemented by the controller 11 (CPU).

The acquisition unit 111 is configured to acquire a plurality of training graphs 30. The machine learning processing unit 112 is configured to perform machine learning for the inference model 5 using the plurality of acquired training graphs 30. The inference model 5 includes the preprocessing module 50 and the graph inference module 55. The machine learning includes training the inference model 5 so that an inference result matches the correct answer (true value) of the task for each training graph 30, the inference result being obtained from the graph inference module 55 by inputting each training graph 30 to the preprocessing module 50 as the input graph.

The training of the inference model 5 includes adjusting (optimizing) values of parameters included in the inference model 5 to derive, from each training graph 30, an output (inference result) suitable for each training graph 30. The machine learning method may be selected as appropriate according to the type of the machine learning model to be employed, or the like. For the machine learning method, for example, an error back propagation method, a method of solving an optimization problem, or the like may be employed.

In the embodiment, a neural network may be used for the inference model 5 (feature extractor 501 and graph inference module 55). In this case, by inputting each training graph 30 to the preprocessing module 50 as the input graph and executing the forward arithmetic processing of the preprocessing module 50 and the graph inference module 55, an inference result for each training graph 30 can be obtained as an output of the graph inference module 55. The machine learning processing unit 112 is configured to adjust the parameters of the inference model 5 (e.g., the parameters of the feature extractor 501 and the graph inference module 55 described above) to reduce an error between an inference result obtained for each training graph 30 and a correct answer in the machine learning process.

The correct answer (true value) for each training graph 30 may be provided by a predetermined rule, such as not having a blocking pair in the case of the stable matching problem, satisfying a predetermined measure, or being points with a correspondence relationship. Alternatively, a correct answer label (teacher signal) may be associated with each acquired training graph 30. Each correct answer label may be configured to indicate the correct answer (true value) of the inference task for the corresponding training graph 30.

The storage processing unit 113 is configured to generate information regarding the trained inference model 5, generated by the machine learning, as the learning result data 125 and store the generated learning result data 125 in a predetermined storage area. As long as the trained inference model 5 can be reproduced, the configuration of the learning result data 125 is not particularly limited, and may be determined as appropriate according to the embodiment. As an example, the learning result data 125 may include information indicating each parameter value obtained by the adjustment of the machine learning. In some cases, the learning result data 125 may include information indicating the structure of the inference model 5. The structure may be identified by, for example, the number of layers, the type of each layer, the number of nodes included in each layer, a coupling relationship between nodes in adjacent layers, and the like.

<Inference device>

Fig. 7 schematically illustrates an example of the software configuration of the inference device 2 according to the embodiment. The controller 21 of the inference device 2 loads the inference program 82 stored in the storage 22 into the RAM. Then, the controller 21 controls each component by interpreting and executing a command, included in the inference program 82 loaded into the RAM, using the CPU. As a result, as illustrated in Fig. 7, the inference device 2 according to the embodiment operates as a computer including the acquisition unit 211, the inference unit 212, and the output unit 213 as software modules. That is, in the embodiment, each software module of the inference device 2 is also implemented by the controller 21 (CPU) similarly to the model generation device 1.

The acquisition unit 211 is configured to acquire the target graph 221. The inference unit 212 includes the trained inference model 5 by holding the learning result data 125. The inference unit 212 is configured to infer the solution to the task for the acquired target graph 221 using the trained inference model 5. The inference of the solution to the task for the target graph 221 includes inputting the target graph 221 as the input graph to the preprocessing module 50 and obtaining a result of inferring the solution to the task from the graph inference module 55. The output unit 213 is configured to output information regarding the result of inferring the solution to the task.

<Others>

Each software module of the model generation device 1 and the inference device 2 will be described in detail in an operation example to be described later. In the embodiment, the example in which each software module of the model generation device 1 and the inference device 2 is implemented by a general-purpose CPU has been described. However, some or all of the software modules may be implemented by one or more of dedicated processors (e.g., graphics processing unit). Each of the above modules may be implemented as a hardware module. In addition, regarding the software configuration of each of the model generation device 1 and the inference device 2, omission, replacement, and addition of the software module may be performed as appropriate according to the embodiment.

§3 Operation Example

[Model generation device]

Fig. 8 is a flowchart illustrating an example of a processing procedure related to machine learning by the model generation device 1 according to the embodiment. The following process procedure for the model generation device 1 described below is an example of the model generation method. However, the processing procedure for the model generation device 1 described below is merely an example, and each step may be changed as much as possible. In addition, with respect to the following process procedure, steps may be omitted, replaced, and added as appropriate according to the embodiment.

(Step S101)

In step S101, the controller 11 operates as the acquisition unit 111 and acquires a plurality of training graphs 30.
Each training graph 30 may be generated as appropriate according to the task inference ability to be acquired by the inference model 5. Conditions under which the task is to be solved may be provided as appropriate, and each training graph 30 may be generated from the provided condition. Each training graph 30 may be obtained from existing data representing an existing transportation network, an existing communication network, or the like. Each training graph 30 may be obtained from image data. The image data may be obtained by a camera or may be generated as appropriate by a computer. Each training graph 30 may be obtained from point cloud data representing a two-dimensional or three-dimensional model.
The data format of each training graph 30 is not particularly limited, and may be selected as appropriate according to the embodiment. In one example, each training graph 30 may be formed of an adjacent list or an adjacent matrix. In another example, each training graph 30 may be formed in a data format (e.g., image data, point cloud data, etc.) other than the adjacent list and the adjacent matrix. As another example, each training graph 30 may be formed of image data. In this case, each pixel may correspond to an element (vertex), and a relationship between pixels may correspond to an edge. As still another example, each training graph 30 may be formed of point cloud data. In this case, each point included in the point cloud data may correspond to an element.
The correct answer (true value) for each training graph 30 may be provided as appropriate. In one example, the correct answer (true value) may be provided by a predetermined rule. In another example, the correct answer (true value) may be indicated by a correct answer label (teacher signal). In this case, a correct answer label corresponding to each training graph 30 may be generated as appropriate, and the generated correct answer label may be associated with each training graph 30. Thereby, each training graph 30 may be generated in the form of a data set associated with a correct answer label.
Each training graph 30 may be automatically generated by computer operation or may be manually generated by including at least partial operator operation. In addition, each training graph 30 may be generated by the model generation device 1 or may be generated by a computer other than the model generation device 1. That is, the controller 11 may generate each training graph 30 automatically, or manually by operator operation via the input device 15. Alternatively, the controller 11 may acquire each training graph 30 generated by another computer via, for example, the network, the storage medium 91, or the like. A part of the plurality of training graphs 30 may be generated by the model generation device 1, and the others may be generated by one or more other computers. At least one of the plurality of training graphs 30 may be generated by, for example, a generation model formed of a machine learning model (e.g., a generative model included in a generative adversarial network).
The number of training graphs 30 to be acquired is not particularly limited, and may be determined as appropriate according to the embodiment so that machine learning can be performed. After acquiring the plurality of training graphs 30, the controller 11 advances the process to the next step S102.

(Step S102)

In step S102, the controller 11 operates as the machine learning processing unit 112, and performs machine learning for the inference model 5 using the plurality of acquired training graphs 30.

As an example of the machine learning process, first, the controller 11 performs initial setting of the inference model 5 to be processed for the machine learning. The structure and the initial values of the parameters of the inference model 5 may be provided by a template or may be determined by an operator's input. Furthermore, in the case of performing additional learning or relearning, the controller 11 may perform the initial setting of the inference model 5 based on learning result data obtained by past machine learning.

Next, the controller 11 trains the inference model 5 through machine learning so that the result of inferring the solution to the task for each training graph 30 matches the correct answer (true value) (i.e., the controller 11 adjusts the parameter value of the inference model 5). For this training process, a stochastic gradient descent method, a mini-batch gradient descent method, or the like may be used.

As an example of the training process, first, the controller 11 inputs each training graph 30 to the inference model 5 and executes forward arithmetic processing. In one example, the controller 11 inputs information indicating features related to each element belonging to each set in each training graph 30 (e.g., a feature of an edge connected to each element, and the feature of each element itself) to the feature extractor 501 and executes arithmetic processing of the feature extractor 501. As a result, the controller 11 calculates the feature value of each element for each set. Subsequently, the controller 11 inputs the feature value of each element calculated for each set to the selection module 503 and executes the arithmetic processing of the selection module 503. In the selection module 503, the controller 11 selects one or more edges extending from each element as a starting point, based on the feature value of each element. In the embodiment, the controller 11 may calculate the likelihood between each element and each candidate element from the feature value and select one or more edges for each element according to the calculated likelihood. The controller 11 generates graph information indicating the calculated feature value of each element and the selected one or more edges for each set. Then, the controller 11 inputs the graph information generated for each set to the graph inference module 55 and executes arithmetic processing of the graph inference module 55. By this series of forward arithmetic processing, the controller 11 acquires the inference result of the solution to the task for each training graph 30 from the graph inference module 55.

Next, the controller 11 calculates an error between the obtained inference result and the corresponding correct answer. A loss function may be used to calculate the error. The loss function may be set as appropriate according to the task, the form of the correct answer, and the like, for example. The controller 11 calculates the gradient of the calculated error. The controller 11 calculates the error in the parameter value of the inference model 5 in order from the output side, using the gradient of the calculated error by the error back propagation method. The controller 11 updates each parameter value of the inference model 5 based on each calculated error. In one example, the parameters of the inference model 5 include the respective parameters of the graph inference module 55 and the preprocessing module 50 (feature extractor 501), and the controller 11 may consistently update each parameter value from the graph inference module 55 to the feature extractor 501. The degree of updating each parameter value may be adjusted by a learning rate. The learning rate may be set by designation of an operator or may be set as a setting value in a program.

The controller 11 adjusts each parameter value so that the sum of the calculated errors is reduced for each training graph 30 by the series of update processing described above. For example, the controller 11 may repeat the adjustment of each parameter value by the series of update processes described above until a predetermined condition is satisfied, such as executing the process a specified number of times or having the sum of calculated errors below a threshold value. As a result of this machine learning process, the controller 11 can generate the trained inference model 5 that has acquired the ability to perform a desired inference task according to the used training graph 30 (i.e., to infer the solution to the task for the provided graph). When the machine learning process is completed, the controller 11 advances the process to the next step S103.

(Step S103)

In step S103, the controller 11 operates as the storage processing unit 113, and generates information regarding the trained inference model 5 generated through machine learning as the learning result data 125. Then, the controller 11 stores the generated learning result data 125 in a predetermined storage area.

The predetermined storage area may be, for example, a RAM in the controller 11, the storage 12, an external storage device, a storage medium, or a combination thereof. The storage medium may be, for example, a CD, a DVD, or the like, and the controller 11 may store the learning result data 125 in the storage medium via the drive 17. The external storage device may be, for example, a data server such as a network attached storage (NAS). In this case, the controller 11 may store the learning result data 125 in the data server via the network using the communication interface 13. Furthermore, the external storage device may be, for example, an externally attached storage device connected to the model generation device 1 via the external interface 14.

When the storage of the learning result data 125 is completed, the controller 11 ends the process procedure for the model generation device 1 according to the present operation example.

Note that the generated learning result data 125 may be provided to the inference device 2 at any timing. For example, the controller 11 may transfer the learning result data 125 to the inference device 2 as the process of step S103 or separately from the process of step S103. The inference device 2 may acquire the learning result data 125 by receiving this transfer. For example, the inference device 2 may acquire the learning result data 125 by accessing the model generation device 1 or the data server via the network using the communication interface 23. For example, the inference device 2 may acquire the learning result data 125 via the storage medium 92. For example, the learning result data 125 may be incorporated in the inference device 2 in advance.

Moreover, the controller 11 may update or newly generate the learning result data 125 by regularly or irregularly repeating the processes of steps S101 to S103 described above. At the time of this repetition, change, correction, addition, deletion, or the like of at least a part of the training graph 30 used for machine learning may be executed as appropriate. Then, the controller 11 may update the learning result data 125 held by the inference device 2 by providing the updated or newly generated learning result data 125 to the inference device 2 by any method.

[Inference Device]

Fig. 9 is a flowchart illustrating an example of a processing procedure related to the execution of the inference task by the inference device 2 according to the embodiment. The processing procedure for the inference device 2 described below is an example of the inference method. However, the processing procedure for the inference device 2 described below is merely an example, and each step may be changed as much as possible. In addition, with respect to the following process procedure, steps may be omitted, replaced, and added as appropriate according to the embodiment.

(Step S201)

In step S201, the controller 21 operates as the acquisition unit 211, and acquires the target graph 221 that is the inference task target. The configuration of the target graph 221 is similar to that of the training graph 30. The data format of the target graph 221 may be selected as appropriate according to the embodiment. The target graph 221 may be generated from conditions input via the input device 25 or the like, for example. The target graph 221 may be obtained from existing data representing, for example, an existing traffic network, an existing communication network, or the like. Alternatively, the target graph 221 may be obtained from, for example, image data, point cloud data, or the like. In one example, the controller 21 may directly acquire the target graph 221. In another example, the controller 21 may indirectly acquire the target graph 221 via, for example, the network, the sensor, another computer, the storage medium 92, or the like. When the target graph 221 is acquired, the controller 21 advances the process to the next step S202.

(Step S202)

In step S202, the controller 21 operates as the inference unit 212, and sets the trained inference model 5 with reference to the learning result data 125. The controller 21 infers the solution to the task for the acquired target graph 221 using the trained inference model 5. The arithmetic processing of the inference may be similar to the forward arithmetic processing in the training process of the machine learning. The controller 21 inputs the target graph 221 to the trained inference model 5 and executes the forward arithmetic processing of the trained inference model 5. As a result of executing this arithmetic processing, the controller 21 can acquire a result of inferring the solution to the task for the target graph 221 from the graph inference module 55. Upon acquiring the inference result, the controller 21 advances the process to step S203.

(Step S203)

In step S203, the controller 21 operates as the output unit 213 and outputs information regarding the inference result.

The output destination and the content of the information to be output may be determined as appropriate according to the embodiment. For example, the controller 21 may directly output the inference result obtained in step S202 to the output device 26 or an output device of another computer. Furthermore, the controller 21 may execute some sort of information processing based on the obtained inference result. Then, the controller 21 may output a result of executing the information processing as information regarding the inference result. The output of the result of executing the information processing may include controlling the operation of the control target device according to the inference result. The output destination may be, for example, the output device 26, the output device of another computer, the control target device, or the like.

When the output of the information regarding the inference result is completed, the controller 21 ends the processing procedure for the inference device 2 according to the present operation example. Note that the controller 21 may continuously and repeatedly execute a series of information processing in steps S201 to S203. The repetition timing may be determined as appropriate according to the embodiment. As a result, the inference device 2 may be configured to continuously and repeatedly execute the inference task.

[Features]

As described above, according to the inference model 5 of the embodiment, the number of edges to be referenced in the inference process can be reduced by the edge selections by the preprocessing module 50. It is possible to improve process efficiency at the time of solving an inference task for data with a graph structure. The model generation device 1 can generate the trained inference model 5 capable of efficiently executing the inference process by the processes of steps S101 and S102 described above. In the machine learning in step S102 described above, by consistently training from the graph inference module 55 to the feature extractor 501, it is possible to generate the trained inference model 5 capable of efficiently performing the inference process while ensuring inference accuracy. The inference device 2 can efficiently solve the inference task for the target graph 221 by the processes of steps S201 to S203 described above. In addition, in the process of step S202, the edge selection by the selection module 503 can reduce the diversity in the variations of the feature values processed by the graph inference module 55. As a result, improved inference accuracy can be expected.

§4 Modifications

Although the embodiment of the present invention has been described in detail above, the above description is merely an example of the present invention in all respects. It goes without saying that various improvements or modifications can be made without departing from the scope of the present invention. For example, the following changes can be made. Hereinafter, the same reference numerals are used for the same components as those in the above embodiment, and the same points as those in the above embodiment are omitted from the description as appropriate. The following modifications can be combined as appropriate.

<4.1>

The inference system 100 according to the above embodiment may be applied to a situation where various tasks that can be represented by graphs are to be solved. The type of the graph (Training graph 30, target graph 221) may be selected as appropriate according to the task. The graph may be, for example, a directed bipartite graph, an undirected bipartite graph, a general directed graph, a general undirected graph, a vertex feature graph, a hypergraph, or the like. The task may be, for example, two-sided matching, one-sided matching, estimation of an event (including prediction), feature estimation of the graph, searching in the graph, categorization of vertices (division of the graph), estimation of a relationship between vertices, and the like. Hereinafter, specific examples in which application situations are limited will be described.

(A) Situation where directed bipartite graph is employed

Fig. 10 schematically illustrates an example of an application situation of an inference system 100A according to a first specific example. The first specific example is an example in which the above embodiment is applied to a situation where a directed bipartite graph is employed as a graph representing a provided condition (a target for solving a task). The inference system 100A according to the first specific example includes the model generation device 1 and an inference device 2A. The inference device 2A is an example of the inference device 2.

In the first specific example, each of training graphs 30A and the target graph 221A (input graph) is a directed bipartite graph 70A. The plurality of elements (vertices) included in the directed bipartite graph 70A are divided to belong to one of the two subsets (71A, 72A) such that no edge exists between the elements in the respective subsets (71A, 72A). Of the two subsets (71A, 72A), an edge from an element belonging to one subset to an element belonging to the other subset and an edge from an element belonging to the other subset to an element belonging to the one subset are individually defined. The plurality of sets in the input graph include the two subsets (71A, 72A) of the directed bipartite graph 70A. Each training graph 30A and the target graph 221A are examples of each training graph 30 and the target graph 221 in the above embodiment. The number of elements in the directed bipartite graph 70A and the presence or absence of a directed edge between the elements may be provided as appropriate to suitably represent a target to be solved by the task.

The content of the task is not particularly limited as long as the task can be represented by the directed bipartite graph, and may be selected as appropriate according to the embodiment. In one example, the task may be two-sided matching. That is, the task may be a matching task between two parties and may be to determine optimal pairing between targets belonging to the respective parties. In this case, the two subsets (71A, 72A) of the directed bipartite graph 70A correspond to two parties in the matching task. An element belonging to each subset (71A, 72A) of the directed bipartite graph 70A corresponds to a target belonging to each party.

A feature of a directed edge flowing from an element belonging to one subset to an element belonging to the other subset corresponds to a preference degree from a target belonging to one party to a target belonging to the other party. Similarly, a feature of a directed edge flowing from an element belonging to the other subset to an element belonging to one subset corresponds to a preference degree from a target belonging to the other party to a target belonging to one party. That is, a feature of a directed edge flowing out from each element corresponds to a preference degree from a target corresponding to each element to a target belonging to another party (a party different from the party to which the corresponding target belongs).

The form of the preference degree may not be particularly limited and may be selected as appropriate according to the embodiment as long as the preference degree for pairing (matching) can be indicated. The preference degree may be represented by, for example, preference order, score, or the like. The score numerically indicates the degree to which it is desired to form a pair. The score may be provided as appropriate. In one example, after a list of preference order is provided from each target, the score may be obtained by numerically converting the preference order, indicated by the list of each target, by a predetermined operation, and the obtained score may be used as the preference degree.

The matching target may be selected as appropriate according to the embodiment. The matching target may be, for example, a male/female, a roommate, a job applicant/employer, an employee/assignment destination, a patient/doctor, an energy supplier/recipient, or the like. Note that the inference device 2A may be considered as a matching device in correspondence with the fact that the task is matching.

The graph inference module 55 may be configured to infer a matching result from graph information for each subset (71A, 72A). The correct answer in the machine learning may be provided as appropriate to obtain a matching result that satisfies the desired criterion.

In the first specific example, the directed bipartite graph 70A is treated as the input graph during the machine learning of the model generation device 1 and during the inference process of the inference device 2A. The calculation of the feature value of each element belonging to each set includes calculating the feature value of each element from the feature of the edge extending from the starting point of each element (in other words, a directed edge flowing out from each element) belonging to each subset (71A, 72A) of the directed bipartite graph 70A. That is, the feature extractor 501 is configured to calculate the feature value of each element from the feature of the directed edge flowing out from each element for each subset (71A, 72A) of the directed bipartite graph 70A. Except for these points, the configuration of the first specific example may be similar to that of the above embodiment.

(Model generation device)

In the first specific example, the model generation device 1 can generate the trained inference model 5 that has acquired the ability to infer the solution to the task for the directed bipartite graph 70A by a processing procedure similar to that in the above embodiment.

That is, in step S101, the controller 11 acquires a plurality of training graphs 30A. Each training graph 30A is formed of the directed bipartite graph 70A. The element (vertex) and the edge in each training graph 30A may be set as appropriate to suitably represent the condition of the training target. In step S102, the controller 11 performs machine learning for the inference model 5 using the plurality of acquired training graphs 30A. This machine learning enables the generation of the trained inference model 5 that has acquired the ability to infer the solution to the task for the directed bipartite graph 70A. The task may be the matching task. In step S103, the controller 11 generates the learning result data 125 indicating the generated trained inference model 5 and stores the generated learning result data 125 in a predetermined storage area. The learning result data 125 may be provided to the inference device 2A at any timing.

(Inference Device)

The hardware configuration and the software configuration of the inference device 2A may be similar to those of the inference device 2 according to the above embodiment. In the first specific example, the inference device 2A can infer the solution to the task for the directed bipartite graph 70A by a processing procedure similar to that of the inference device 2.

That is, in step S201, the controller of the inference device 2A operates as an acquisition unit and acquires the target graph 221A. The target graph 221A is formed of the directed bipartite graph 70A. The element (vertex) and the edge in the target graph 221A may be set as appropriate to suitably represent the condition of the inference target. In step S202, the controller operates as an inference unit, and infers the solution to the task for the acquired target graph 221A using the trained inference model 5. When the trained inference model 5 has acquired the ability to perform the matching task, the controller can obtain a matching inference result.

In step S203, the controller operates as an output unit and outputs information regarding the inference result. As an example, when the inference result of the matching is obtained, the controller may directly output the obtained inference result to the output device. As a result, the inference device 2A may prompt the operator whether or not to employ the inference result. As another example, when the inference result of the matching is obtained, the controller may establish (confirm) at least a part of the matching of the inference result. In this case, the matching target (element) may be added at any timing, and the inference device 2A may repeatedly execute matching between free targets (elements). The target (element) for which matching has been established by the execution of the matching task may be excluded from the targets for the subsequent matching tasks. In addition, the established matching may be resolved at any timing, and the target (element) for which the matching has been resolved may be added to the targets for the subsequent matching tasks. As a result, the inference device 2A may be configured to perform matching online in real time.

(Feature)

According to the first specific example, it is possible to improve the efficiency of the inference process in a situation where a provided task (e.g., matching task) is represented by the directed bipartite graph 70A. The model generation device 1 can generate the trained inference model 5 capable of efficiently performing the task represented by the directed bipartite graph 70A. By using such a trained inference model 5, the inference device 2A can efficiently infer the solution to the task represented by the directed bipartite graph 70A.

In the directed bipartite graph 70A, a directed edge is not necessarily provided to every combination of elements between the two subsets (71A, 72A). That is, there may be a combination of elements not provided with a directed edge. In this case, the selection module 503 may select one or more directed edges flowing out from each element regardless of whether or not edges are provided between the elements in advance. This makes it possible to infer a solution to a task with reference to a combination of elements useful for solving the task even if no directed edge is provided. As a result, improved inference accuracy can be expected.

(B) Situation where undirected bipartite graph is employed

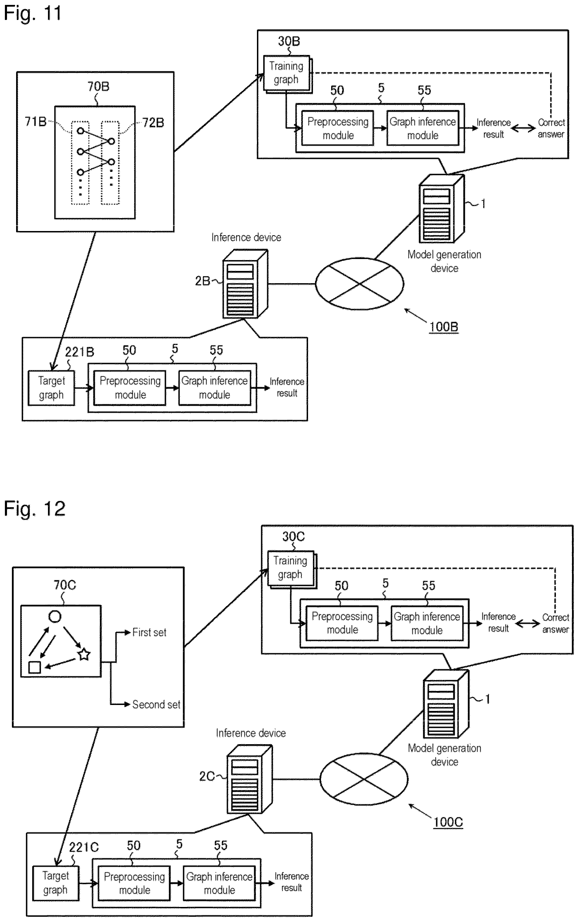

Fig. 11 schematically illustrates an example of an application situation of an inference system 100B according to a second specific example. The second specific example is an example in which the above embodiment is applied to a situation where an undirected bipartite graph is employed as a graph representing a provided condition (a target for solving a task). The inference system 100B according to the second specific example includes the model generation device 1 and an inference device 2B. The inference device 2B is an example of the inference device 2.

In the second specific example, each of training graphs 30B and the target graph 221B (input graph) is an undirected bipartite graph 70B. A plurality of vertices constituting the undirected bipartite graph 70B are divided to belong to any either one of two subsets (71B, 72B) such that no edge exists between the vertices in the respective subsets (71B, 72B). Of the two subsets (71B, 72B), an edge from an element belonging to one subset to an element belonging to the other subset and an edge from an element belonging to the other subset to an element belonging to one subset are defined without being distinguished from each other. The plurality of sets in the input graph include the two subsets (71B, 72B) of the undirected bipartite graph 70B. Each training graph 30B and the target graph 221B are examples of each training graph 30 and the target graph 221 in the above embodiment. Note that the number of elements in the undirected bipartite graph 70B and the presence or absence of a directed edge between the elements may be provided as appropriate to suitably represent a target to be solved by the task.

The content of the task is not particularly limited as long as the task can be represented by the undirected bipartite graph, and may be selected as appropriate according to the embodiment. In one example, the task may be one-sided matching. That is, the task may be a matching task between two parties and may be to determine optimal pairing between targets belonging to the respective parties. In this case, the two subsets (71B, 72B) of the undirected bipartite graph 70B correspond to two parties in the matching task. An element (vertex) belonging to each subset (71B, 72B) of the undirected bipartite graph 70B corresponds to a target belonging to each party. The feature of an edge connecting an element belonging to one of the two subsets (71B, 72B) and an element belonging to the other corresponds to the cost or reward of pairing a target belonging to one of the two parties and a target belonging to the other (specifically, two targets corresponding to two elements connected by the edge).

The matching target may be selected as appropriate according to the embodiment. The matching target may be, for example, a transport robot/baggage, a room/customer (automatic check-in at an accommodation facility), a seat/customer (e.g., seat allocation in public transportation, entertainment facilities, etc.), or the like. In another example, matching may be performed to track a plurality of objects between a plurality of images (e.g., successive frames in a moving image). In this case, a first image may correspond to one party, a second image may correspond to the other party, and a matching target (vertex) may be an object (or object area) detected in each image. By matching the same object between the images, the object can be tracked.

The cost indicates the degree of hindering matching. The reward indicates the degree of promoting matching. As an example, in a situation where matching between a transport robot and a cargo is performed, the distance from the target transport robot to the target cargo may be set as the cost. As another example, in a situation where matching between a seat and a customer is performed, the target customer's preference (e.g., a preferred position such as a window side or an aisle side) may be set as the reward for the target seat. The numerical representation of the cost or reward may be determined as appropriate according to the embodiment. Note that the inference device 2B may be considered as a matching device in correspondence with the fact that the task is matching.

In another example, a feature map obtained in a convolutional neural network can be regarded as an undirected bipartite graph with a height of h elements belonging to one subset and a width of w elements belonging to the other subset. Therefore, the undirected bipartite graph 70B may be formed of such a feature map, and the task may be a predetermined inference on an image. The inference on the image may be, for example, dividing an area, detecting an object, or the like. These predetermined inferences may be executed in various situations, such as a situation of extracting a target appearing in a captured image obtained by a vehicle's camera, and a situation of detecting a person appearing in a captured image obtained by a street camera. Note that the structure of the convolutional neural network is not particularly limited, and may be determined as appropriate according to the embodiment. In addition, the feature map may be obtained as the output of the convolutional neural network or may be obtained as an operation result in the middle of the convolutional neural network.

The graph inference module 55 may be appropriately configured to derive the inference result of the solution to the task (e.g., the above-described matching, predetermined image inference, etc.) for the undirected bipartite graph 70B from the graph information for each subset (71B, 72B). The correct answer in the machine learning may be provided as appropriate according to the content of the task for the undirected bipartite graph 70B. When the task is the matching task, similarly to the first specific example, the correct answer in the machine learning may be provided as appropriate so that a matching result that satisfies a desired criterion is obtained. When the task is the predetermined inference on the image, for example, the correct answer for the inference, such as the true value of the area division or the true value of the detection result of the object, may be provided as appropriate to each training graph 30B.

In the second specific example, the undirected bipartite graph 70B is treated as the input graph during the machine learning of the model generation device 1 and during the inference process of the inference device 2B. The calculation of the feature value of each element belonging to each set includes calculating the feature value of each element from the feature of the edge connected to each element belonging to each subset (71B, 72B) of the undirected bipartite graph 70B. That is, the feature extractor 501 is configured to calculate the feature value of each element from the feature of the edge connected to each element for each subset (71B, 72B) of the undirected bipartite graph 70B. Except for these points, the configuration of the second specific example may be similar to that of the above embodiment.

(Model generation device)

In the second specific example, the model generation device 1 can generate the trained inference model 5 that has acquired the ability to infer the solution to the task for the undirected bipartite graph 70B by a processing procedure similar to that of the above embodiment.

That is, in step S101, the controller 11 acquires a plurality of training graphs 30B. Each training graph 30B is formed of the undirected bipartite graph 70B. The element (vertex) and the edge in each training graph 30B may be set as appropriate to suitably represent the condition of the training target. In step S102, the controller 11 performs machine learning for the inference model 5 using the plurality of acquired training graphs 30B. This machine learning enables the generation of the trained inference model 5 that has acquired the ability to infer the solution to the task for the undirected bipartite graph 70B. The task may be, for example, the matching task, an inference task for an image, or the like. In step S103, the controller 11 generates the learning result data 125 indicating the generated trained inference model 5 and stores the generated learning result data 125 in a predetermined storage area. The learning result data 125 may be provided to the inference device 2B at any timing.

(Inference Device)

The hardware configuration and the software configuration of the inference device 2B may be similar to those of the inference device 2 according to the above embodiment. In the second specific example, the inference device 2B can infer the solution to the task for the undirected bipartite graph 70B by a processing procedure similar to that of the inference device 2.

That is, in step S201, the controller of the inference device 2B operates as an acquisition unit and acquires the target graph 221B. The target graph 221B is formed of the undirected bipartite graph 70B. The element (vertex) and the edge in the target graph 221B may be set as appropriate to suitably represent the condition of the inference target. When the trained inference model 5 has acquired the ability to perform the predetermined inference on the image, the controller may acquire the target graph 221B (feature map) by executing arithmetic processing of the convolutional neural network.

In step S202, the controller operates as an inference unit, and infers the solution to the task for the target graph 221B using the trained inference model 5. When the trained inference model 5 has acquired the ability to perform the matching task, the controller can obtain a matching inference result. When the trained inference model 5 has acquired the ability to perform the predetermined inference on the image, the controller can acquire the result of the predetermined inference on the image from which the target graph 221B has been acquired.

In step S203, the controller operates as an output unit and outputs information regarding the inference result. As an example, the controller may directly output the obtained inference result to the output device. As another example, when the inference result of matching is obtained, the controller may establish matching of at least a part of the inference result, similarly to the first specific example. In this case, similarly to the first specific example, the inference device 2B may be configured to perform matching online in real time. For example, in the case of the automatic check-in/seat assignment, the inference device 2B may add a corresponding element to each subset in accordance with the visit of the customer and the opening of the room/seat, and assign a vacant room/vacant seat by matching according to the request of the customer. Then, the inference device 2B may delete each element corresponding to the assigned customer and room/seat from each subset. As still another example, in the case of the object tracking, the controller may track one or more objects in each image based on the inference result. In this case, the inference device 2B may be configured to add the target object to the matching target when the target object is detected in the image, and exclude the target object from the matching target when the target object is no longer detected in the image (e.g., out of the imaging range, hidden behind a shadow of a shielding target, etc.). As a result, the inference device 2B may be configured to perform object tracking in real time.

(Feature)

According to the second specific example, it is possible to improve the efficiency of the inference process in a situation where a provided task (e.g., a matching task, an inference task for an image) is represented by the undirected bipartite graph 70B. The model generation device 1 can generate the trained inference model 5 capable of efficiently performing the task represented by the undirected bipartite graph 70B. By using such a trained inference model 5, the inference device 2B can efficiently infer the solution to the task represented by the undirected bipartite graph 70B.

Furthermore, as in the first specific example, in the undirected bipartite graph 70B, an edge is not necessarily provided to every combination of elements between the two subsets (71B, 72B). The selection module 503 may select one or more edges extending from each element, regardless of whether or not edges are provided between the elements in advance. This makes it possible to infer a solution to a task with reference to a combination of elements useful for solving the task even if no edge is provided. As a result, improved inference accuracy can be expected.

(C) Case of employing general directed graph

Fig. 12 schematically illustrates an example of an application situation of an inference system 100C according to a third specific example. The third specific example is an example in which the above embodiment is applied to a situation where a general directed graph (this may be simply referred to as a directed graph) is employed as a graph representing a provided condition (a target for solving a task). The inference system 100C according to the third specific example includes the model generation device 1 and an inference device 2C. The inference device 2C is an example of the inference device 2.

In the third specific example, each of training graphs 30C and target graph 221C (input graph) is a general directed graph 70C. The general directed graph 70C may include a plurality of elements (vertices) and one or more directed edges coupling between the elements (vertices). Circles, squares, and stars in the figure indicate elements (vertices). A plurality of sets in the input graph are made up of a first set and a second set. The element belonging to the first set corresponds to the starting point of the directed edge constituting the general directed graph 70C, and the element belonging to the second set corresponds to the end point of the directed edge. Therefore, the number of elements in the first set and the second set may be the same, and the elements belonging to the respective sets may be common. The edge flowing out from the element belonging to the first set to the element belonging to the second set corresponds to the directed edge flowing out from the starting point to the end point, and the edge flowing out from the element belonging to the second set to the element belonging to the first set corresponds to the directed edge flowing in from the starting point to the end point. Each training graph 30C and the target graph 221C are examples of each training graph 30 and the target graph 221 in the above embodiment. Note that the number of elements in the general directed graph 70C and the presence or absence of a directed edge between the elements may be determined as appropriate to suitably represent a target to be solved by the task.

The content of the task is not particularly limited as long as the task can be represented by the general directed graph, and may be selected as appropriate according to the embodiment. In one example, the general directed graph 70C may be configured to represent a network. The network may correspond to, for example, a traffic network such as a road network, a railway network, a route network, or an air route network. Alternatively, the network may correspond to a communication network. Correspondingly, the task may be to infer (including predicting) an event occurring on the network. The inference of the event may be, for example, predicting the time required for movement between two vertices, predicting the occurrence of an abnormality, searching for an optimal route, or the like.

In this case, the features of the directed edges may be configured to include attributes of connections between corresponding vertices in the network. When the network corresponds to a traffic network, each vertex may correspond to a traffic base (e.g., intersection, main point, station, port, airport, etc.), and the attribute of the connection may be, for example, a type of road (e.g., general road, expressways, etc.), a traffic allowance of the road, a time required for movement, a distance, or the like. When the network corresponds to a communications network, each vertex is a base of communication (e.g., server, router, switch, etc.), and the attribute of the connection may be, for example, a type of communication, an allowable communication amount, a communication speed, or the like.

The feature of the directed edge may include one or more attribute values. Note that the inference device 2C may be considered as a prediction device in correspondence with the prediction of the event.

In another example, the task may be dividing a general directed graph (i.e., dividing elements constituting a general directed graph). As a specific example of the task, the general directed graph 70C may be a weighted graph indicating similarity of motion obtained from a result of associating feature points between two consecutive images. In this case, the division of the graph may be performed to detect a dense partial graph for the purpose of determining the accuracy of the association. Alternatively, the general directed graph 70C may be a graph indicating a feature point in the image. In this case, the division of the graph may be performed to classify the feature point for each object. In each case, the feature of the directed edge may be set as appropriate to indicate the relationship between the feature points.

In still another example, the task may be to infer a feature appearing in a general directed graph. As a specific example of the task, the general directed graph 70C may be, for example, a graph, such as a knowledge graph, representing a profile of a target (e.g., person, target, etc.). In this case, the task may be to infer the feature of the target derived from the profile represented in the graph.

The graph inference module 55 may be appropriately configured to derive the inference result of the solution to the task (e.g., the above-described event inference, graph division, feature inference, etc.) for the general directed graph 70C from graph information for each set. The correct answer in the machine learning may be provided as appropriate according to the content of the task for the general directed graph 70C. For example, the correct answer for the inference, such as the true value of the event, the true value of the division, or the true value of the feature, may be provided as appropriate to each training graph 30C.

In the third specific example, the general directed graph 70C is treated as the input graph during the machine learning of the model generation device 1 and during the inference process of the inference device 2C. The calculation of the feature value of each element belonging to each set includes calculating a feature value of the element belonging to the first set from the feature of the directed edge that flows out from the element belonging to the first set, and calculating a feature value of the element belonging to the second set from the feature of the directed edge that flows into the element belonging to the second set. That is, the feature extractor 501 is configured to calculate the feature value of each element belonging to the first set from the feature of the directed edge that flows out from each element belonging to the first set, and to calculate the feature value of each element belonging to the second set from the feature of the directed edge that flows into each element belonging to the second set. Except for these points, the configuration of the third specific example may be similar to that of the above embodiment.

(Model generation device)

In the third specific example, the model generation device 1 can generate the trained inference model 5 that has acquired the ability to infer the solution to the task for the general directed graph 70C by a processing procedure similar to that of the above embodiment.

That is, in step S101, the controller 11 acquires a plurality of training graphs 30C. Each training graph 30C is formed of the general directed graph 70C. The element (vertex) and the directed edge in each training graph 30C may be set as appropriate to suitably represent the condition of the training target. In step S102, the controller 11 performs machine learning for the inference model 5 using the plurality of acquired training graph 30C. This machine learning enables the generation of the trained inference model 5 that has acquired the ability to infer the solution to the task for the general directed graph 70C. The task may be, for example, the event inference, graph division, feature inference, or the like. In step S103, the controller 11 generates the learning result data 125 indicating the generated trained inference model 5 and stores the generated learning result data 125 in a predetermined storage area. The learning result data 125 may be provided to the inference device 2C at any timing.

(Inference Device)

The hardware configuration and the software configuration of the inference device 2C may be similar to those of the inference device 2 according to the above embodiment. In the third specific example, the inference device 2C can infer the solution to the task for the general directed graph 70C by a processing procedure similar to that of the inference device 2.

That is, in step S201, the controller of the inference device 2C operates as an acquisition unit and acquires the target graph 221C. The target graph 221C is formed of the general directed graph 70C. The element (vertex) and the directed edge in the target graph 221C may be set as appropriate to suitably represent the condition of the inference target. In step S202, the controller operates as an inference unit, and infers the solution to the task for the target graph 221C using the trained inference model 5.

In step S203, the controller operates as an output unit and outputs information regarding the inference result. As an example, the controller may directly output the obtained inference result to the output device. As another example, when the inference result of an event occurring on the network is obtained, the controller may output an alarm notifying that the possibility of occurrence of an abnormality is equal to or greater than a threshold. As still another example, when the inference result of the optimal route in the communication network is obtained, the control unit may transmit a packet according to the inferred optimal route.

(Feature)

According to the third specific example, it is possible to improve the efficiency of the inference process in a situation where the provided task is represented by the general directed graph 70C The model generation device 1 can generate the trained inference model 5 capable of efficiently performing the task represented by the general directed graph 70C. By using such a trained inference model 5, the inference device 2C can efficiently infer the solution to the task represented by the general directed graph 70C.

Furthermore, similarly to the first specific example and the like, in the general directed graph 70C, a directed edge may not necessarily be provided to every combination of elements between the first set and the second set. The selection module 503 may select one or more edges extending from each element, regardless of whether or not edges are provided between the elements in advance. This makes it possible to infer a solution to a task with reference to a combination of elements useful for solving the task even if no edge is provided. As a result, improved inference accuracy can be expected.

(D) Case of employing general undirected graph

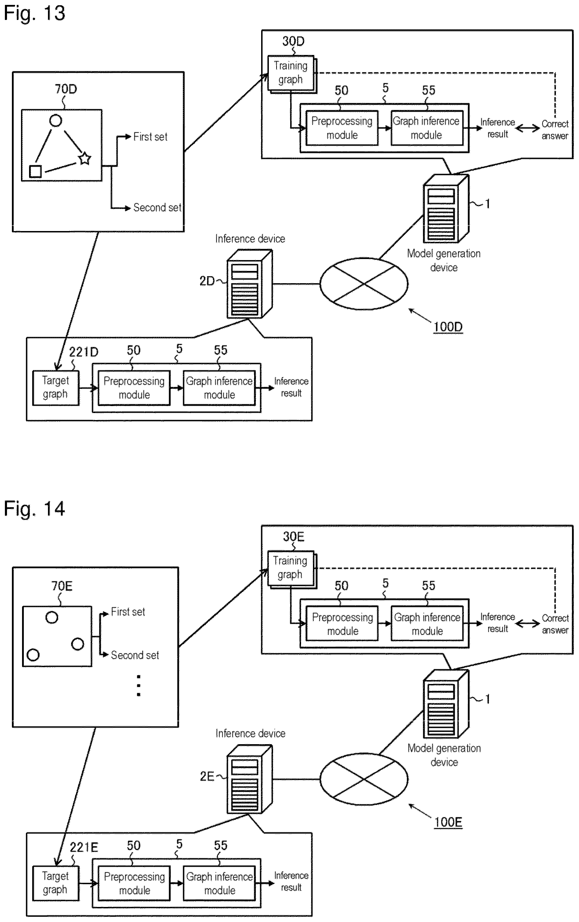

Fig. 13 schematically illustrates an example of an application situation of an inference system 100D according to a fourth specific example. The fourth specific example is an example in which the above embodiment is applied to a situation where a general undirected graph (may be simply referred to as an undirected graph) is employed as a graph representing a provided condition (a target for solving a task). The inference system 100D according to the fourth specific example includes the model generation device 1 and the inference device 2D. The inference device 2D is an example of the inference device 2.

In the fourth specific example, each of training graphs 30D and a target graph 221D (input graph) is a general undirected graph 70D. The general undirected graph 70D may include a plurality of elements (vertices) and one or more edges coupling between the elements (vertices). A plurality of sets in the input graph are made up of a first set and a second set. Each element belonging to the first set or the second set corresponds to an element constituting the general undirected graph 70D. Therefore, similarly to the third specific example, the number of elements in the first set and the number of elements in the second set may be the same, and the elements belonging to the respective sets may be common. An edge extending from an element belonging to the first set to an element belonging to the second set and an edge extending from an element belonging to the second set to an element belonging to the first set both correspond to an edge (undirected edge) connecting two corresponding elements. Each training graph 30D and the target graph 221D are examples of each training graph 30 and the target graph 221 in the above embodiment. Note that the number of elements and the presence or absence of an edge between the elements in the general undirected graph 70D may be determined as appropriate to suitably represent the target to be solved by the task.

The content of the task is not particularly limited as long as the task can be represented by the general undirected graph, and may be selected as appropriate according to the embodiment. The task in the fourth specific example may be the same as that in the third specific example except that the edge does not have directionality. That is, in one example, the general undirected graph 70D may be configured to represent a network. In response, the task may be to infer (including predict) an event occurring on the network. In this case, the features of the edges may be configured to include attributes of connections between corresponding vertices in the network. Note that the inference device 2D may be considered as a prediction device in correspondence with the prediction of the event. In another example, the task may be to divide a general undirected graph. In still another example, the task may be to infer a feature appearing in a general undirected graph.

The graph inference module 55 may be appropriately configured to derive the inference result of the solution to the task (e.g., the above-described event inference, graph division, feature inference, etc.) for the general undirected graph 70D from graph information for each set. The correct answer in the machine learning may be provided as appropriate according to the content of the task for the general undirected graph 70D. For example, the correct answer for the inference, such as the true value of the event, the true value of the division, or the true value of the feature, may be provided as appropriate to each training graph 30C.

In the fourth specific example, the general undirected graph 70D is treated as the input graph during the machine learning of the model generation device 1 and during the inference process of the inference device 2D. The calculation of the feature value of each element belonging to each set includes calculating the feature value of each element from the feature of the edge connected to each element. That is, the feature extractor 501 is configured to calculate, for each set, the feature value of each element from the feature of the edge connected to each element. In the fourth specific example, the operation result for the first set and the operation result for the second set can be the same. Therefore, the calculation of the feature value by the feature extractor 501, the edge selection by the selection module 503, and the inference process by the graph inference module 55 may be executed in common for the first set and the second set. That is, either one of the series of arithmetic processing for the first set or the series of arithmetic processing for the second set may be omitted, and both arithmetic processing may be treated as being executed by execution of either one of the arithmetic processing. Except for these points, the configuration of the fourth specific example may be similar to that of the above embodiment.

(Model generation device)

In the fourth specific example, the model generation device 1 can generate the trained inference model 5 that has acquired the ability to infer the solution to the task for the general undirected graph 70D by a processing procedure similar to that of the above embodiment.

That is, in step S101, the controller 11 acquires a plurality of training graphs 30D. Each training graph 30D is formed of the general undirected graph 70D. The element (vertex) and the edge in each training graph 30D may be set as appropriate to suitably represent the condition of the training target. In step S102, the controller 11 performs machine learning for the inference model 5 using the plurality of acquired training graphs 30D. This machine learning enables the generation of the trained inference model 5 that has acquired the ability to infer the solution to the task for the general undirected graph 70D. In step S103, the controller 11 generates the learning result data 125 indicating the generated trained inference model 5 and stores the generated learning result data 125 in a predetermined storage area. The learning result data 125 may be provided to the inference device 2D at any timing.

(Inference Device)

The hardware configuration and the software configuration of the inference device 2D may be similar to those of the inference device 2 according to the above embodiment. In the fourth specific example, the inference device 2D can infer the solution to the task for the general undirected graph 70D by a processing procedure similar to that of the inference device 2.

That is, in step S201, the controller of the inference device 2D operates as an acquisition unit and acquires the target graph 221D. The target graph 221D is formed of the general undirected graph 70D. The element (vertex) and the edge in the target graph 221D may be set as appropriate to suitably represent the condition of the inference target. In step S202, the controller operates as an inference unit, and infers the solution to the task for the target graph 221D using the trained inference model 5.

In step S203, the controller operates as an output unit and outputs information regarding the inference result. As an example, the controller may directly output the obtained inference result to the output device. As another example, when the inference result of an event occurring on the network is obtained, the controller may output an alarm notifying that the possibility of occurrence of an abnormality is equal to or greater than a threshold. As still another example, when the inference result of the optimal route in the communication network is obtained, the control unit may transmit a packet according to the inferred optimal route.

(Feature)

According to the fourth specific example, it is possible to improve the efficiency of the inference process in a situation where the provided task is represented by the general undirected graph 70D. The model generation device 1 can generate the trained inference model 5 capable of efficiently performing the task represented by the general undirected graph 70D. By using such a trained inference model 5, the inference device 2D can efficiently infer the solution to the task represented by the general undirected graph 70D.

Furthermore, as in the first specific example and the like, in the general undirected graph 70D, an edge is not necessarily provided to every combination of elements between the first set and the second set. The selection module 503 may select one or more edges extending from each element, regardless of whether or not edges are provided between the elements in advance. This makes it possible to infer a solution to a task with reference to a combination of elements useful for solving the task even if no edge is provided. As a result, improved inference accuracy can be expected.

(E) Case of employing vertex feature graph in which relationship between elements is unknown

Fig. 14 schematically illustrates an example of an application situation of an inference system 100E according to a fifth specific example. The fifth specific example is an example in which the above embodiment is applied to a situation where a vertex feature graph is employed as a graph representing a provided condition (a target for solving a task), and a relationship between elements (vertices) constituting the employed vertex feature graph is unknown. The inference system 100E according to the fifth specific example includes the model generation device 1 and an inference device 2E. The inference device 2E is an example of the inference device 2.

In the fifth specific example, each of training graphs 30E and a target graph 221E (input graph) is a vertex feature graph 70E including a plurality of elements (vertices), and is a vertex feature graph 70E configured such that each element has an attribute (vertex feature). The type and number of attributes of each element may be determined as appropriate according to the embodiment. Each element may have one or more types of attribute values. The weight is an example of the attribute, and the vertex weighted graph is an example of the vertex feature graph 70E.

Each element (vertex) included in the vertex feature graph 70E may be assigned to each set as appropriate. The number of sets may be determined as appropriate according to the embodiment. In one example, all the elements included in the vertex feature graph 70E may be assigned to both the first set and the second set, and the elements belonging to the first set and the elements belonging to the second set may be the same. In another example, the elements belonging to the first set and the elements belonging to the second set may partially overlap. In still another example, in the case of inferring the correspondence relationship between the point cloud data, each set may correspond to the point cloud data, and an element belonging to each set may correspond to a point constituting the point cloud data. In this case, the elements belonging to the respective sets may not overlap. Each training graph 30E and the target graph 221E are examples of each training graph 30 and the target graph 221 in the above embodiment. Note that the number and attributes of the elements (vertices) in the vertex feature graph 70E may be determined as appropriate to suitably represent the target to be solved by the task.

The content of the task is not particularly limited and may be selected as appropriate according to the embodiment as long as the task can be represented by a vertex feature graph in which a relationship between elements is unknown. In one example, the task may be to estimate a relationship between elements belonging to the respective sets. The estimation of the relationship may be, for example, to determine whether or not the points are the same in the matching of the point cloud data.

As a specific example of the task, the vertex feature graph 70E may be configured to correspond to an image in which an object has been detected (e.g., a scene graph). In this case, each element may correspond to a detected object, and the attribute of each element may correspond to the attribute of the detected object. A plurality of sets in the input graph may be made up of a first set and a second set, and all elements included in the vertex feature graph 70E may be assigned to both the first set and the second set. The estimation of the relationship between the elements may be to infer a feature appearing in the image (image recognition). The specific example may be employed in various situations in which image recognition is performed.

As another specific example of the task, the vertex feature graph 70E may be configured to correspond to an image in which one or more persons appear and in which feature points of a person are detected (e.g., scene graph and skeleton model). In this case, each element may correspond to the feature points (e.g., joints, etc.) of the detected person, and the attribute of each element may correspond to the attribute (e.g., the type, position, inclination, and the like of the joint) of the detected feature point. A plurality of sets in the input graph may be made up of a first set and a second set, and all elements included in the vertex feature graph 70E may be assigned to both the first set and the second set. The estimation of the relationship between each element may be to infer the type of the motion of the person (motion analysis). The specific example may be employed in various situations where motion analysis, such as video analysis of sports (in particular, team sports), is performed.

As another specific example of the task, the vertex feature graph 70E may be configured to indicate properties of a composition. The properties of the composition may be defined by, for example, the type of influence on the human body (drug efficacy, side effect, persistence, reaction upon skin contact, etc.), the degree of various effects (efficiency of photoelectric effect, efficiency of thermoelectric effect, absorption/reflection efficiency of infrared radiation, friction coefficient, etc.), or the like. In this case, each element may correspond to a particular property, and the attribute of each element may be configured to indicate the degree of the particular property. A plurality of sets in the input graph may be made up of a first set and a second set, and all elements included in the vertex feature graph 70E may be assigned to both the first set and the second set. The estimation of the relationship between each element may be to infer (generating) a structure (e.g., chemical formula or physical crystal structure) of a composition that satisfies the properties indicated by the vertex feature graph 70E.

As another specific example of the task, the vertex feature graph 70E may include a plurality of pieces of point cloud data each representing a twodimensional or three-dimensional model. In this case, each set may correspond to a piece of point cloud data, and each element belonging to each set may correspond to a point included in the corresponding point cloud data. The attribute of each element may correspond to the attribute of the point included in the point cloud data. The estimation of the relationship between each element may be, for example, matching points such as point cloud alignment, optical flow estimation, and stereo matching.

The graph inference module 55 may be appropriately configured to derive the inference result of the solution to the task (e.g., the above-described image recognition, motion analysis, structure generation, matching, etc.) for the vertex feature graph 70E from the graph information for each set. The correct answer in the machine learning may be provided as appropriate according to the content of the task for the vertex feature graph 70E. For example, the correct answer for inference, such as the true value of image recognition, the true value of motion analysis, of the true value of structure generation, may be provided as appropriate to each training graph 30E.

In the fifth specific example, the vertex feature graph 70E is treated as the input graph during the machine learning of the model generation device 1 and during the inference process of the inference device 2E. The calculation of the feature value of each element belonging to each set includes calculating the feature value of each element from the attribute of each element. That is, the feature extractor 501 is configured to calculate, for each set, the feature value of each element from the attribute of each element. Except for these points, the configuration of the fifth specific example may be similar to that of the above embodiment.

(Model generation device)

In the fifth specific example, the model generation device 1 can generate the trained inference model 5 that has acquired the ability to infer the solution to the task for the vertex feature graph 70E by a processing procedure similar to that of the above embodiment.

That is, in step S101, the controller 11 acquires a plurality of training graphs 30E. Each training graph 30E is formed of the vertex feature graph 70E. The element (vertex) and the attribute in each training graph 30E may be set as appropriate to suitably represent the condition of the training target. In step S102, the controller 11 performs machine learning for the inference model 5 using the plurality of acquired training graphs 30E. This machine learning enables the generation of the trained inference model 5 that has acquired the ability to infer the solution to the task for the vertex feature graph 70E. In step S103, the controller 11 generates the learning result data 125 indicating the generated trained inference model 5 and stores the generated learning result data 125 in a predetermined storage area. The learning result data 125 may be provided to the inference device 2E at any timing.

(Inference Device)

The hardware configuration and the software configuration of the inference device 2E may be similar to those of the inference device 2 according to the above embodiment. In the fifth specific example, the inference device 2E can infer the solution to the task for the vertex feature graph 70E by a processing procedure similar to that of the inference device 2.

That is, in step S201, the controller of the inference device 2E operates as an acquisition unit and acquires the target graph 221E. The target graph 221E is formed of the vertex feature graph 70E. The element (vertex) and the attribute in the target graph 221E may be set as appropriate to suitably represent the condition of the inference target. In the case of structure generation, the value of each property (i.e., the attribute value of each element) may be provided by a random number or may be provided by designation of an operator. In step S202, the controller operates as an inference unit, and infers the solution to the task for the target graph 221E using the trained inference model 5. In one example, the task is to estimate a relationship between elements in the target graph 221E.

In step S203, the controller operates as an output unit and outputs information regarding the inference result. As an example, the controller may directly output the obtained inference result to the output device. As another example, the controller may execute information processing according to the obtained inference result. For example, when the target graph 221E is configured to correspond to an image in which an object has been detected, the controller may execute information processing according to the result of the image recognition. As a specific application situation, the fifth specific example may be applied to a situation where a captured image obtained by capturing a situation outside the vehicle with a camera is recognized. In this situation, when it is determined that an obstacle is approaching the vehicle based on the result of image recognition, the controller may give a command to avoid the obstacle (e.g., stop, lane change, etc.) to the vehicle. For example, when the target graph 221E is configured to correspond to an image in which feature points of a person are detected, the controller may execute information processing according to the result of the motion analysis. As a specific application situation, the fifth specific example may be applied to a situation where motion analysis of a person appearing in a captured image obtained by a camera installed on a platform of a railroad station is performed. In this situation, when it is determined that the person present on the platform is in danger (e.g., it is about to fall from the platform) based on the result of the motion analysis, the controller may output an alarm for notifying of the fact.

(Feature)

According to the fifth specific example, it is possible to improve the efficiency of the inference process in a situation where a provided task (e.g., to estimate a relationship between element) is represented by the vertex feature graph 70E. The model generation device 1 can generate the trained inference model 5 capable of efficiently performing the task represented by the vertex feature graph 70E. By using such a trained inference model 5, the inference device 2D can efficiently infer the solution to the task represented by the vertex feature graph 70E.

(F) Case of employing vertex feature graph in which a relationship between elements is defined.

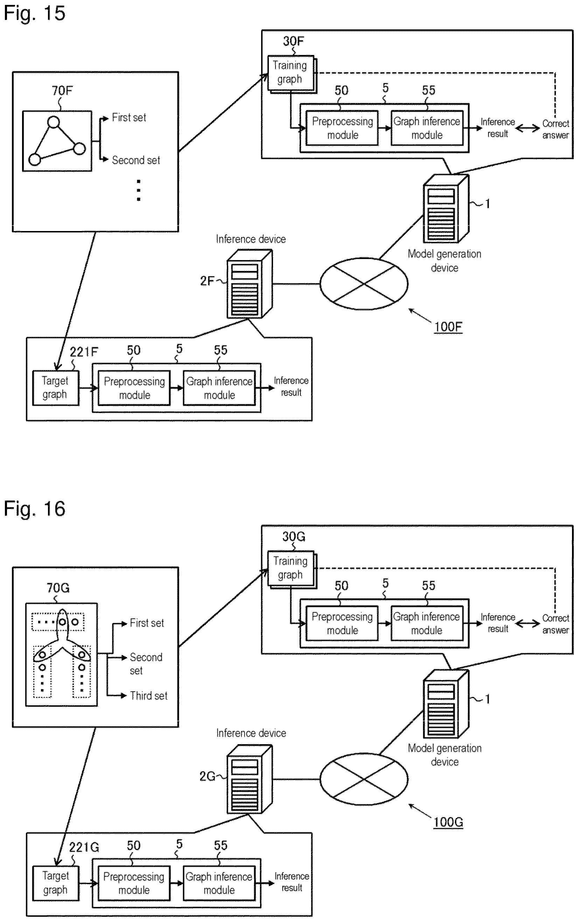

Fig. 15 schematically illustrates an example of an application situation of an inference system 100F according to a sixth specific example. The sixth specific example is an example in which the above embodiment is applied to a situation where a vertex feature graph is employed as a graph representing a provided condition (a target for solving a task), and a relationship between elements (vertices) included in the employed vertex feature graph is known. The inference system 100F according to the sixth specific example includes the model generation device 1 and an inference device 2F. The inference device 2F is an example of the inference device 2.

In the sixth specific example, each of training graphs 30F and a target graph 221F (input graph) is a vertex feature graph 70F including a plurality of elements (vertices), and is a vertex feature graph 70F configured such that each element has an attribute. In the sixth specific example, a relationship between elements included in the vertex feature graph 70F is defined. The vertex feature graph 70F may be configured similarly to the vertex feature graph 70E in the fifth specific example except that the relationship is defined in advance. Each training graph 30F and the target graph 221F are examples of each training graph 30 and the target graph 221 in the above embodiment. Note that the number of elements (vertices), the attributes, and the edges between the elements (vertices) in the vertex feature graph 70F may be determined as appropriate to suitably represent the target to be solved by the task.

The content of the task is not particularly limited as long as the task can be represented by the vertex feature graph, and may be selected as appropriate according to the embodiment. In one example, the task may be to infer an event derived from the vertex feature graph 70F.

As a specific example of the task, the vertex feature graph 70F may be configured to indicate a chemical formula or a physical crystal structure indicating a composition. In this case, each element may correspond to a chemical element, and the attribute of each element may correspond to, for example, the attribute of the chemical element such as the type of the chemical element. A relationship between elements may correspond to a connection relationship between chemical elements. A plurality of sets in the input graph may be made up of a first set and a second set, and all elements included in the vertex feature graph 70F may be assigned to both the first set and the second set. The inference of the event may be to infer a feature related to the composition such as a property of the composition. In addition, the inference of an event may be to infer a procedure for producing a substance having the composition. For the representation of the procedure, for example, a natural language, a symbol string, or the like may be used. In the case of using the symbol string, a correspondence relationship between the symbol string and the procedure may be determined in advance by a rule. Moreover, the symbol string may include commands for controlling operation of a production device configured to produce the material of the composition. The production device may be, for example, a computer, a controller, a robot device, or the like. The command may be, for example, a control command, a computer program, or the like.

As another specific example of the task, the vertex feature graph 70F may be configured to indicate the feature of each of a plurality of targets (e.g., person, target, etc.). In this case, each element may correspond to a target, and the attribute of each element may correspond to a feature of the target. The feature of each target may be extracted from the graph representing the profile by the third specific example or the fourth specific example. A plurality of sets in the input graph may be made up of a first set and a second set, and all elements included in the vertex feature graph 70F may be assigned to both the first set and the second set. The inference of the event may be to optimally match the targets. The matching target may be, for example, a customer/advertisement, a patient/doctor, a person/job, or the like.

As still another specific example of the task, the vertex feature graph 70F may be configured to illustrate a power supply grid. In this case, each element may correspond to a production node or a consumption node of power. The attribute of the element may be configured to indicate, for example, a production amount, a consumption amount, or the like. Each edge may correspond to an electrical line. A plurality of sets in the input graph may be made up of a first set and a second set, and all elements included in the vertex feature graph 70F may be assigned to both the first set and the second set. The inference of the event may be to infer an optimal combination of production and consumption nodes.

The graph inference module 55 may be appropriately configured to derive the inference result of the solution to the task (e.g., the above-described event inference, etc.) for the vertex feature graph 70F from the graph information for each set. The correct answer in the machine learning may be provided as appropriate according to the content of the task for the vertex feature graph 70F. For example, the correct answer for inference, such as the true value of an event, may be provided to each training graph 30F.

In the sixth specific example, the vertex feature graph 70F is treated as the input graph during the machine learning of the model generation device 1 and during the inference process of the inference device 2F. The calculation of the feature value of each element belonging to each set includes calculating the feature value of each element from information indicating the relationship between the attribute of each element and the edge connected to each element. That is, the feature extractor 501 is configured to calculate, for each set, the feature value of each element from the attribute of each element and the feature of the edge (information indicating the relationship). Except for these points, the configuration of the sixth specific example may be similar to that of the above embodiment.

(Model generation device)

In the sixth specific example, the model generation device 1 can generate the trained inference model 5 that has acquired the ability to infer the solution to the task for the vertex feature graph 70F by a processing procedure similar to that of the above embodiment.

That is, in step S101, the controller 11 acquires a plurality of training graphs 30F. Each training graph 30F is formed of the vertex feature graph 70F. The element (vertex), the attribute, and the edge in each training graph 30F may be set as appropriate to suitably represent the condition of the training target. In step S102, the controller 11 performs machine learning for the inference model 5 using the plurality of acquired training graphs 30F. This machine learning enables the generation of the trained inference model 5 that has acquired the ability to infer the solution to the task for the vertex feature graph 70F. In step S103, the controller 11 generates the learning result data 125 indicating the generated trained inference model 5 and stores the generated learning result data 125 in a predetermined storage area. The learning result data 125 may be provided to the inference device 2F at any timing.

(Inference Device)

The hardware configuration and the software configuration of the inference device 2F may be similar to those of the inference device 2 according to the above embodiment. In the sixth specific example, the inference device 2F can infer the solution to the task for the vertex feature graph 70F by a processing procedure similar to that of the inference device 2.

That is, in step S201, the controller of the inference device 2F operates as an acquisition unit and acquires the target graph 221F. The target graph 221F is formed of the vertex feature graph 70F. The element (vertex), the attribute, and the edge in the target graph 221F may be set as appropriate to suitably represent the condition of the inference target. In step S202, the controller operates as an inference unit, and infers the solution to the task for the acquired target graph 221F using the trained inference model 5.

In step S203, the controller operates as an output unit and outputs information regarding the inference result. As an example, the controller may directly output the obtained inference result to the output device. As another example, when the target graph 221F is configured to indicate a target composition (chemical formula or physical crystal structure), and a procedure for generating a substance having the target composition is inferred, the controller may control the operation of the production device according to the procedure indicated by the obtained inference result. As another example, when matching between targets or a combination of a production node and a consumption node is inferred, the controller may establish (determine) the matching or the combination.

(Feature)

According to the sixth specific example, it is possible to improve the efficiency of the inference process in a situation where the provided task is represented by the vertex feature graph 70F. The model generation device 1 can generate the trained inference model 5 capable of efficiently performing the task represented by the vertex feature graph 70F. By using such a trained inference model 5, the inference device 2F can efficiently infer the solution to the task represented by the vertex feature graph 70F.

Furthermore, as in the first specific example and the like, in the vertex feature graph 70F, an edge is not necessarily provided to every combination of elements between the respective sets. The selection module 503 may select one or more edges extending from each element, regardless of whether or not edges are provided between the elements in advance. This makes it possible to infer a solution to a task with reference to a combination of elements useful for solving the task even if no edge is provided. As a result, improved inference accuracy can be expected.

(G) Case of employing hypergraph

Fig. 16 schematically illustrates an example of an application situation of an inference system 100G according to a seventh specific example. The seventh specific example is an example in which the above embodiment is applied to a situation where a hypergraph is employed as a graph representing a provided condition (a target for solving a task). The inference system 100G according to the seventh specific example includes the model generation device 1 and an inference device 2G. The inference device 2G is an example of the inference device 2.

In the seventh specific example, each of training graphs 30G and a target graph 221G (input graph) is a K hypergraphs 70G. K may be an integer of 3 or more. A plurality of sets in the input graph includes K subsets in the hypergraph 70G. A plurality of elements (vertices) included in the hypergraph 70G may be divided to belong to any one of K subsets. In the example of Fig. 16, each element included in the hypergraph 70G is divided to belong to any one of three subsets. An edge may be provided as appropriate to indicate a combination of elements belonging to the respective subsets. Each training graph 30G and the target graph 221G are examples of each training graph 30 and the target graph 221 in the above embodiment. Note that the number of elements (vertices), the presence or absence of an edge between the elements (vertices), and the value of K in the hypergraph 70G may be determined as appropriate to suitably represent the target to be solved by the task.

The content of the task is not particularly limited as long as the task can be represented by the hypergraph, and may be selected as appropriate according to the embodiment. In one example, the task may be a matching task among K parties and may be to determine an optimal combination of targets belonging to the respective parties. In this case, each subset in the hypergraph 70G corresponds to a party in the matching task. An element belonging to each subset in the hypergraph 70G corresponds to a target belonging to each party. The feature of the edge flowing out from the ith element belonging to the ith subset to the combination of the elements belonging to one of (K-1) other subsets (other than the ith subset) may correspond to the cost or reward of matching the combination of the target corresponding to the ith element and the target corresponding to each element belonging to the subsets other than the ith subset. Alternatively, the feature of the edge may correspond to a preference degree for a combination of a target corresponding to each element belonging to a subset other than the ith element from the target corresponding to the ith element.

The matching target may be selected as appropriate according to the embodiment. The matching task may be performed for the purpose of, for example, identifying an optimal combination of three or more parts, identifying an optimal combination of three or more people, identifying a combination of three terms optimal for learning for calculation of triplet loss in distance learning, identifying a combination of feature points belonging to the same person when simultaneously inferring postures of a plurality of persons in an image, identifying an optimal combination of a delivery track, baggage, and route, or the like. Accordingly, the matching target may be, for example, a part, a person, data for which triplet loss is to be calculated, feature points of a person detected in an image, a delivery track/baggage/route, or the like. The optimal combination of people may be identified for team building for, for example, managers/programmers/sales, web front-end programmers/back-end programmers/data scientists, or the like.

The graph inference module 55 may be appropriately configured to derive the inference result of the solution to the task (e.g., the above-described matching task, etc.) for the hypergraph 70G from the graph information for each subset. The correct answer in the machine learning may be provided as appropriate according to the content of the task for the hypergraph 70G. For example, the correct answer for inference, such as the true value of matching satisfying a predetermined criterion, may be provided to each training graph 30G. As an example, in the case of the team building described above, a predetermined criteria may be defined to evaluate results achieved in the real world, such as financial profit, reduced turnover, reduced development processes, increased progress reporting, and improved psychological indexes (e.g., questionnaire, sleeping time, blood pressure, etc.).

In the seventh specific example, the hypergraph 70G is treated as the input graph during the machine learning of the model generation device 1 and during the inference process of the inference device 2G. The calculation of the feature value of each element belonging to each set includes calculating the feature value of each element from the feature of the edge connected to each element belonging to each subset in the hypergraph 70G. That is, the feature extractor 501 is configured to calculate, for each set, the feature value of each element from the feature of the edge connected to each element for each subset in the hypergraph 70G. Except for these points, the configuration of the seventh specific example may be similar to that of the above embodiment.

(Model generation device)

In the seventh specific example, the model generation device 1 can generate the trained inference model 5 that has acquired the ability to infer the solution to the task for the hypergraph 70G by a processing procedure similar to that of the above embodiment.

That is, in step S101, the controller 11 acquires a plurality of training graphs 30G. Each training graph 30G is formed of the hypergraph 70G. The element and the edge in each training graph 30G may be set as appropriate to suitably represent the condition of the training target. In step S102, the controller 11 performs machine learning for the inference model 5 using the plurality of acquired training graphs 30G. This machine learning enables the generation of the trained inference model 5 that has acquired the ability to infer the solution to the task for the hypergraph 70G. In step S103, the controller 11 generates the learning result data 125 indicating the generated trained inference model 5 and stores the generated learning result data 125 in a predetermined storage area. The learning result data 125 may be provided to the inference device 2G at any timing.

(Inference Device)

The hardware configuration and the software configuration of the inference device 2G may be similar to those of the inference device 2 according to the above embodiment. In the seventh specific example, the inference device 2G can infer the solution to the task for the hypergraph 70G by a processing procedure similar to that of the inference device 2.

That is, in step S201, the controller of the inference device 2G operates as an acquisition unit and acquires the target graph 221G. The target graph 221G is formed of the hypergraph 70G. The element and the edge in the target graph 221G may be set as appropriate to suitably represent the condition of the inference target. In step S202, the controller operates as an inference unit, and infers the solution to the task for the target graph 221G using the trained inference model 5.

In step S203, the controller operates as an output unit and outputs information regarding the inference result. As an example, the controller may directly output the obtained inference result to the output device. As another example, when the inference result of matching is obtained, the controller may establish matching of at least a part of the inference result, similarly to the first specific example and the like. Furthermore, the inference device 2G may be configured to perform matching online in real time.

(Feature)

According to the seventh specific example, it is possible to improve the efficiency of the inference process in a situation where the provided task is represented by the hypergraph 70G. The model generation device 1 can generate the trained inference model 5 capable of efficiently executing the task represented by the hypergraph 70G. By using such a trained inference model 5, the inference device 2G can efficiently infer the solution to the task represented by the hypergraph 70G.

Furthermore, as in the first specific example and the like, in the hypergraph 70G, an edge is not necessarily provided to every combination of elements between the respective subsets. The selection module 503 may select one or more edges to connect to each element regardless of whether or not edges are provided in advance between the elements. This makes it possible to infer a solution to a task with reference to a combination of elements useful for solving the task even if no edge is provided. As a result, improved inference accuracy can be expected.

<4.2>

In the above embodiment, the selection module 503 may include an arithmetic module configured to be differentiable and configured to calculate the likelihood. That is, the selection module 503 may be configured to calculate the likelihood between each element and each candidate element with the arithmetic module. The arithmetic module may be formed of a machine learning model including one or more parameters that are used to execute arithmetic processing of calculating likelihood and are adjusted through machine learning. Then, in the machine learning process, the arithmetic module of the selection module 503 may also be consistently trained together with the graph inference module 55 and the feature extractor 501. This can optimize the performance of the arithmetic module for the inference process. As a result, it is possible to improve the efficiency of the inference process while ensuring the inference accuracy in the trained inference model 5.

<4.3>

In the above embodiment, during the forward operation of the machine learning in step S102, the controller 11 may add a random number to the likelihood calculated in the selection module 503 and select one or more edges based on the obtained value. This enables probabilistic edge selection search in the machine learning process. That is, it is possible to expand the range for searching for the optimal value of the parameter of the edge selection. As a result, it is possible to expect improvement in the inference accuracy of the generated trained inference model 5.

<4.4>

In the above embodiment, the selection module 503 may have a plurality of criteria for selecting edges and may be configured to select edges for each criterion. The plurality of criteria may include, for example, giving priority to one with a high likelihood, selecting one with a likelihood differing by a threshold or more, and the like. Random selection may be included as one of the plurality of criteria. In this case, the selection module 503 may be configured to further add (e.g., through concatenation operation) information indicating a criterion for selecting the edge to the information indicating the edge selection result in the graph information for each set. The information indicating the reference may be formed, for example, of a one-hot vector or the like. Each criterion may be represented by any function. Two or more references may be represented by one function, or one reference may be represented by one function. According to the present modification, it is possible to expand the range of the edge to be referenced by selecting the edge based on the plurality of criteria, thereby, it is possible to expect improvement in the inference accuracy of the generated trained inference model 5.

§5 Examples

To verify the effectiveness of the above embodiment, inference models according to the following examples and comparative examples were generated. However, the present invention is not limited to the following examples.

<Data sets>

First, the vertex feature graph of the fifth specific example is assumed as a graph representing a provided condition, and matching between two pieces of point cloud data is employed for the task. The following two data sets were prepared for machine learning and the evaluation of the matching task.

As the first data set, the Surreal data set published in Reference Document 2 (Gul Varol, Javier Romero, Xavier Martin, Naureen Mahmood, Michael J. Black, Ivan Laptev, Cordelia Schmid, "Learning from Synthetic Humans", [online], [searched January 11, 2022], Internet <URL: https://arxiv.org/abs/1701.01370>) was used. The first set of data includes 230,000-point cloud samples for training and 100-point cloud samples for evaluation. 115,000 combinations (training graphs) were created by randomly pairing the point cloud samples for training. Meanwhile, 100 combinations (input and target graphs for evaluation) were created by randomly rotating and translating the point cloud samples for evaluation to create paired point cloud samples. As a result, between each combination, each point cloud sample is configured to indicate an object (human body) with no change in shape (rigid setting).

As the second data set, the Surreal data set of the first data set and the SHREC data set published in Reference Document 3 (Bo Li, et al. "A comparison of 3D shape retrieval methods based on a large-scale benchmark supporting multimodal queries", [online], [searched on January 11, 2022], Internet <URL: https://userweb.cs.txstate.edu/~burtscher/papers/cviu15.pdf>) were used. This second data set includes 230,000-point cloud samples and 860-point cloud samples. Similarly to the first data set, 115,000 combinations were used for the combination of the point cloud samples for training. Meanwhile, 430 combinations (input and target graphs for evaluation) were created by randomly pairing the point cloud samples for evaluation. As a result, between each combination for evaluation in the second data set, each point cloud sample was configured to represent a human body with a change in shape (posture) (non-rigid setting). In the first data set and the second data set, each point cloud sample included 1024 points (elements).

<Examples>

By employing the configuration according to the above embodiment and using an open-source machine learning library, an inference model according to a first example was created on a personal computer. The feature extractor is configured to calculate a 128-dimensional feature value for each element. The selection module was configured to select 128 edges for each element in each point cloud sample (set) based on the likelihood. For the calculation of the likelihood, the arithmetic expression of the above Equation 1 was used. WeaveNet proposed in Non-Patent Document 3 is employed as the graph inference module. The number of feature weaving layers was set to 10. Machine learning for the inference model according to the first example was performed using the combination of the 115,000 training point cloud samples.

In machine learning, a learning rate was set to 0.0001, and Adam was used as an optimization algorithm. Then, in correspondence with the method illustrated in Fig. 4 of Reference Document 4 to be described later, the coordinates of each point are mapped to the corresponding destination based on the inference result with respect to the combination of the point cloud samples for training, and then the parameter value of the inference model is optimized to minimize the reconfiguration error when the original point cloud is restored by another process (unsupervised learning). As a result, the trained inference model according to the first example was generated.

In addition, an inference model according to a second example with a configuration similar to that of the first example was created. Then, the correct answer label is provided to the combination of the 115,000 training point cloud samples, and the parameter value of the inference model according to the second example is optimized (supervised learning) such that an output suitable for the true value of the matching indicated by the correct answer label is obtained. Other conditions of the second example were set to be the same as those of the first example. As a result, a trained inference model according to the second example was generated.

<Comparative examples>

Meanwhile, the inference model according to the first comparative example was created by employing the CorrNet3D proposed in Reference Document 4 (Yiming Zeng, Yue Qian, Zhiyu Zhu, Junhui Hou, Hui Yuan, Ying He, "CorrNet3D: Unsupervised end-to-end learning of dense correspondence for 3D point clouds", [online], [searched on January 11, 2022], Internet <URL: https://arxiv.org/abs/2012.15638>). Then, by performing machine learning under conditions (unsupervised learning) similar to those of the first example, a trained inference model according to the first comparative example was generated. In addition, an inference model according to a second comparative example with a configuration similar to that of the first comparative example was created. Then, a trained inference model according to the second comparative example was generated by performing machine learning under conditions (supervised learning) similar to those of the second example.

<Evaluation>

Using the trained inference model according to each of the examples and the comparative examples generated as described above, the task of point cloud matching was performed on the combination of the point cloud samples for evaluation of the first data set and the second data set. The tolerance was varied between 0.00 to 0.2 to evaluate the matching accuracy using the trained inference model according to each of the examples and comparative examples.

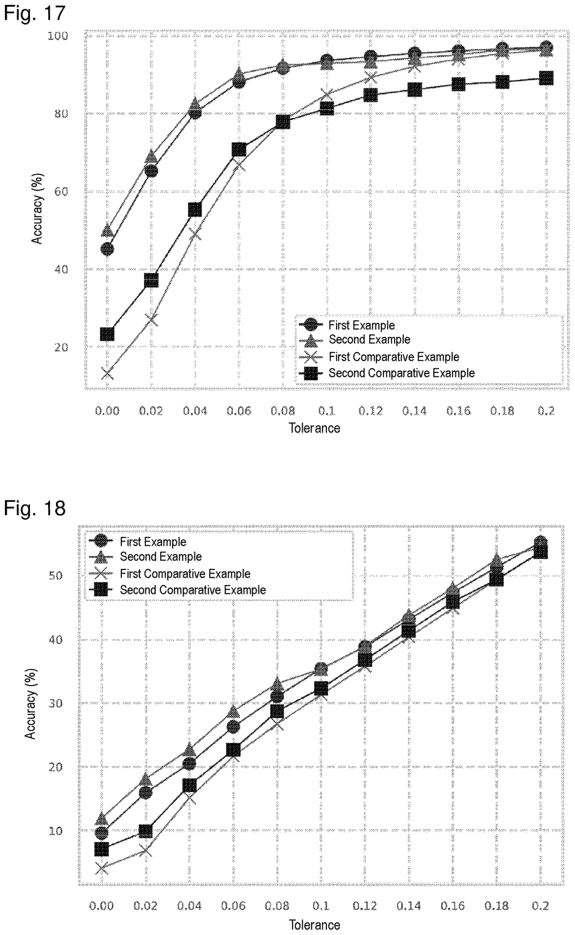

Fig. 17 illustrates the experimental results (matching accuracy within set tolerance) of the examples and comparative examples for the first data set. Fig. 18 illustrates the experimental results (matching accuracy within set tolerance) of the examples and comparative examples for the second data set. As illustrated in Figs. 17 and 18, in both the rigid setting and the non-rigid setting, the matching accuracy was higher in each example than in each comparative example. In particular, the matching accuracy of the first example trained through unsupervised learning was higher than that of the second comparative example trained through supervised learning. It has been found from these results that according to the present invention, the efficiency of the inference process can be improved by edge selection, and it is possible to generate a trained inference model that can infer with higher accuracy compared to existing methods.

Moreover, to compare the matching accuracy between the first example and the first comparative example, two samples having similar degrees of matching accuracy as follows were extracted from the combination for evaluation of the second data set. The two samples respectively have: the matching accuracy according to the first example with a tolerance = 0.00, and the matching accuracy of the first comparative example with a tolerance = 0.06. Then, in each of the extracted combination samples, the matching accuracy of the first example and the first comparative example in the case of the tolerance = 0.00 and the tolerance = 0.06 was compared.

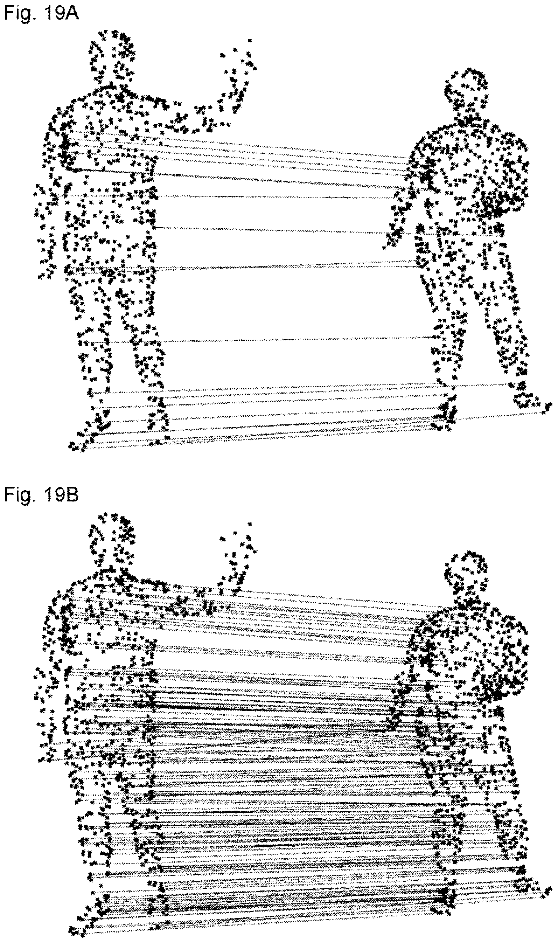

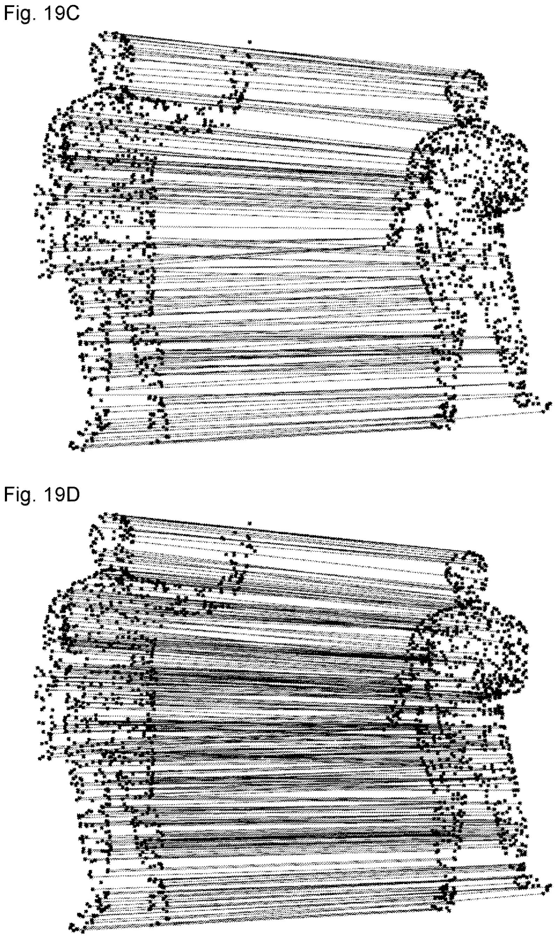

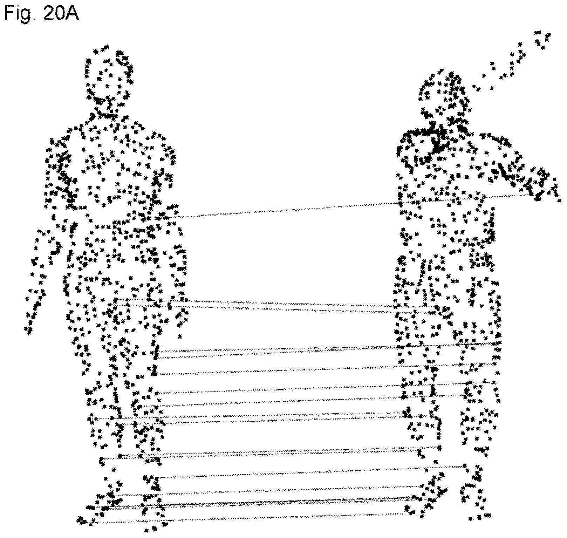

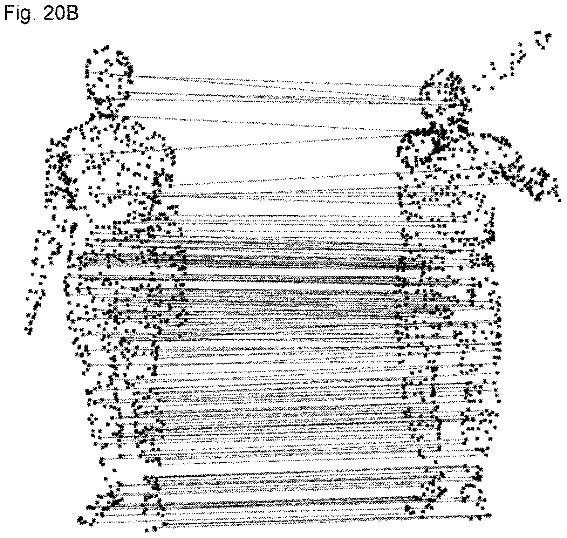

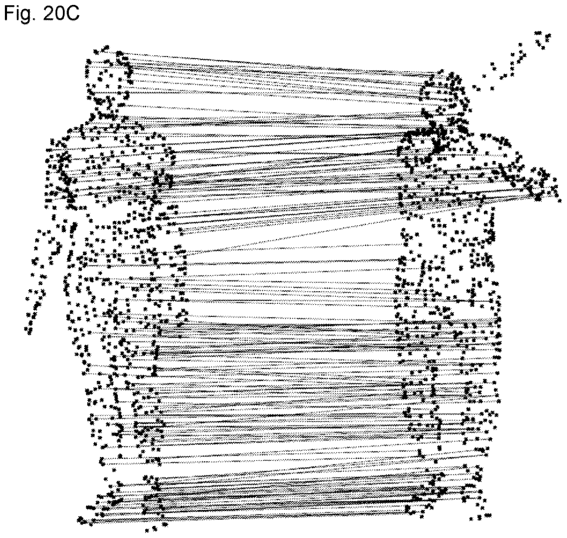

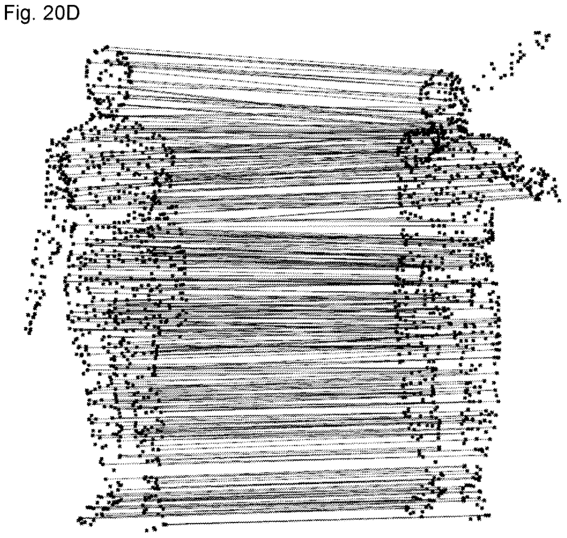

Figs. 19A and 19C illustrate matching results of the first comparative example for the first combination sample of the second data set in the case of the tolerance set to 0.00 (Fig. 19A) and 0.06 (Fig. 19C). Figs. 19B and 19D illustrate matching results of the first example for the first combination sample of the second data set in the case of the tolerance set to 0.00 (Fig. 19B) and 0.06 (Fig. 19D). Figs. 20A and 20C illustrate matching results of the first comparative example for the second combination sample of the second data set in the case of the tolerance set to 0.00 (Fig. 20A) and 0.06 (Fig. 20C). Figs. 20B and 20D illustrate matching results of the first example for the second combination sample of the second data set in the case of the tolerance set to 0.00 (Fig. 20B) and 0.06 (Fig. 20D). Note that solid lines in Figs. 19A to 19D and Figs. 20A to 20D indicate pairs of points correctly matched within the set tolerance.

As illustrated in Figs. 19C, 19D, 20C, and 20D, for each sample where the matching accuracy according to the first example with the tolerance = 0.00 and the matching accuracy of the first comparative example with the tolerance = 0.06 are comparable, the matching accuracy of the first example with the tolerance = 0.06 was higher. It has also been found from these results that according to the present invention, it is possible to generate a trained inference model that can infer with higher accuracy compared to existing methods.

DESCRIPTION OF SYMBOLS

| | |
|---|---|
| 1 | model generation device |
| 11 | controller |
| 12 | storage |
| 13 | communication interface |
| 14 | external interface |
| 15 | input device |
| 16 | output device |
| 17 | drive |
| 81 | model generation program |
| 91 | storage medium |
| 111 | acquisition unit |
| 112 | learning processing unit |
| 113 | storage processing unit |
| 125 | learning result data |
| 2 | Inference device |
| 21 | controller |
| 22 | storage |
| 23 | communication interface |
| 24 | external interface |
| 25 | input device |
| 26 | output device |
| 27 | drive |
| 82 | Inference program |
| 92 | storage medium |
| 211 | acquisition unit |
| 212 | Inference unit |
| 213 | output unit |
| 221 | target graph |
| 30 | training graph |
| 5 | inference model |
| 50 | preprocessing module |
| 501 | feature extractor |
| 503 | selection module |
| 55 | graph inference module |

**Claims**

1. A model generation method in which a computer executes:

a step of acquiring a plurality of training graphs; and
a step of performing machine learning for an inference model by using the plurality of training graphs acquired,
wherein the inference model includes a preprocessing module and a graph inference module,
the preprocessing module includes a feature extractor and a selection module,
the feature extractor is configured to calculate a feature value of each of elements belonging to one of a plurality of sets included in an input graph,
the selection module

selects one or more edges extending from each of the elements as a starting point, based on the calculated feature value of each of the elements, and
generates, for each of the sets, graph information indicating the calculated feature value of each of the elements and the selected one or more edges,

the graph inference module is configured to be differentiable and to infer a solution to a task for the input graph from the generated graph information for each of the sets, and

the machine learning includes training the inference model to cause an inference result to match a correct answer for the task for each of the training graphs, the inference result being obtained from the graph inference module by inputting each of the training graphs as the input graph to the preprocessing module.

2. The model generation method according to claim 1, wherein
the selection of the one or more edges based on the feature value of each of the elements includes

calculating a likelihood between each of the elements and each of candidate elements that is a candidate for a destination to which an edge from each of the elements is connected, and
selecting the one or more edges according to the calculated likelihood.

3. The model generation method according to claim 1 or 2, wherein

each of the training graphs is a directed bipartite graph,
a plurality of elements included in the directed bipartite graph are divided to belong to one of two subsets,
the plurality of sets in the input graph include the two subsets in the directed bipartite graph, and
the calculation of the feature value of each of the elements includes calculating the feature value of each of the elements from a feature of an edge that extends from each of the elements in the directed bipartite graph as a starting point.

4. The model generation method according to claim 3, wherein

the task is a matching task between two parties and to determine an optimal pairing of targets belonging to the respective parties,
the two subsets in the directed bipartite graph correspond to the two parties in the matching task, and
the element belonging to each of the subsets in the directed bipartite graph corresponds one-to-one to the target belonging to each of the parties.

5. The model generation method according to claim 1 or 2, wherein

each of the training graphs is an undirected bipartite graph,
a plurality of elements included in the undirected bipartite graph are divided to belong to one of two subsets,
the plurality of sets in the input graph include the two subsets in the undirected bipartite graph, and
the calculation of the feature value of each of the elements includes calculating the feature value of each of the elements from a feature of an edge connected to each of the elements in the undirected bipartite graph.

6. The model generation method according to claim 5, wherein

the task is a matching task between two parties and to determine an optimal pairing of targets belonging to the respective parties,
the two subsets in the undirected bipartite graph correspond to the two parties in the matching task, and
the element belonging to each of the subsets in the undirected bipartite graph corresponds one-to-one to the target belonging to each of the parties.

7. The model generation method according to claim 1 or 2, wherein

each of the training graphs is a directed graph,
the plurality of sets in the input graph include a first set and a second set, an element belonging to the first set corresponds to a starting point of a directed edge that constitutes the directed graph,
an element belonging to the second set corresponds to an end point of the directed edge, and
the calculation of the feature value of each of the elements includes calculating a feature value of the element belonging to the first set from a feature of a directed edge that flows out from the element belonging to the first set, and calculating a feature value of the element belonging to the second set from a feature of a directed edge that flows into the element belonging to the second set.

8. The model generation method according to claim 1 or 2, wherein

    each of the training graphs is an undirected graph,
    the plurality of sets in the input graph include a first set and a second set,
    each of the elements belonging to the first set or the second set corresponds one-to-one to each of the elements constituting the undirected graph, and
    the calculation of the feature value of each of the elements includes calculating the feature value of each of the elements from a feature of an edge connected to each of the elements.

9. The model generation method according to claim 1 or 2, wherein

    each of the training graphs is configured to cause each of the elements included in each of the training graphs to have an attribute, and
    the calculation of the feature value of each of the elements includes calculating the feature value of each of the elements from the attribute of each of the elements.

10. The model generation method according to claim 9, wherein the task is to estimate a relationship between elements belonging to the respective sets.

11. The model generation method according to claim 1 or 2, wherein

    each of the training graphs is configured to cause each of the elements included in each of the training graphs to have an attribute,
    a relationship between each of the elements included in each of the training graphs is defined, and
    the calculation of the feature value of each of the elements includes calculating the feature value of each of the elements from information indicating the attribute and the relationship of each of the elements.

12. The model generation method according to claim 1 or 2, wherein

    each of the training graphs is a hypergraph,
    a plurality of elements included in the hypergraph are divided to belong to any one of three or more subsets,
    the plurality of sets in the input graph include the three or more subsets in the hypergraph, and
    the calculation of the feature value of each of the elements includes calculating the feature value of each of the elements from a feature of an edge connected to each of the elements in the hypergraph.

13. A model generation device comprising:

    an acquisition unit configured to acquire a plurality of training graphs; and
    a learning processing unit configured to perform machine learning for an inference model by using the plurality of training graphs acquired,
    wherein the inference model includes a preprocessing module and a graph inference module,
    the preprocessing module includes a feature extractor and a selection module,
    the feature extractor is configured to calculate a feature value of each of elements belonging to one of a plurality of sets included in an input graph,
    the selection module

        selects one or more edges, extending from each of the elements as a starting point, based on the calculated feature value of each of the elements, and
        generates, for each of the sets, graph information indicating the calculated feature value of each of the elements and the selected one or more edges,

    the graph inference module is configured to be differentiable and to infer a solution to a task for the input graph from the generated graph information for each of the sets, and
    the machine learning includes training the inference model to cause an inference result to match a correct answer for the task for each of the training graphs, the inference result being obtained from the graph inference module by inputting each of the training graphs to the preprocessing module as the input graph.

14. An inference program in which a computer executes

a step of acquiring a target graph,

a step of inferring a solution to a task for the acquired target graph by using an inference model trained through machine learning, and

a step of outputting information regarding a result of inferring the solution to the task,

wherein the inference model includes a preprocessing module and a graph inference module,

the preprocessing module includes a feature extractor and a selection module

the feature extractor is configured to calculate a feature value of each of elements belonging to one of a plurality of sets included in an input graph,

the selection module

selects one or more edges, extending from each of the elements as a starting point, based on the calculated feature value of each of the elements, and

generates, for each of the sets, graph information indicating the calculated feature value of each of the elements and the selected one or more edges,

the graph inference module is configured to be differentiable and to infer the solution to the task for the input graph from the generated graph information for each of the sets, and

the inference of the solution to the task for the target graph includes inputting the target graph as the input graph to the preprocessing module and obtaining a result of inferring the solution to the task from the graph inference module.

**15.** An inference device comprising:

an acquisition unit configured to acquire a target graph;

an inference unit configured to infer a solution to a task for the acquired target graph by using an inference model trained through machine learning; and

an output unit configured to output information regarding a result of inferring the solution to the task;

wherein the inference model includes a preprocessing module and a graph inference module,

the preprocessing module includes a feature extractor and a selection module

the feature extractor is configured to calculate a feature value of each of elements belonging to one of a plurality of sets included in an input graph,

the selection module

selects one or more edges, extending from each of the elements as a starting point, based on the calculated feature value of each of the elements, and

generates, for each of the sets, graph information indicating the calculated feature value of each of the elements and the selected one or more edges,

the graph inference module is configured to be differentiable and to infer the solution to the task for the input graph from the generated graph information for each of the sets, and

the inference of the solution to the task for the target graph includes inputting the target graph as the input graph to the preprocessing module and obtaining a result of inferring the solution to the task from the graph inference module.

Fig. 1

Fig. 2

Fig. 3

Fig. 4

Fig. 5

2

Inference device

22 — Storage
82 — Inference program
125 — Learning result data

23 — Communication I/F

24 — External I/F

Controller
CPU
RAM
ROM
21

Input device — 25
Output device — 26
Drive — 27

92 — Storage medium

Fig. 6

1

Model generation device

Acquisition unit — 111
Learning processing unit — 112
Storage processing unit — 113

30 — Training graph

50  5  55

Preprocessing module → Graph inference module → Inference result ↔ Correct answer

Learning result data — 125

Fig. 7

2

Inference device

| Acquisition unit | ~211 | Inference unit | ~212 | Output unit | ~213 |

Learning result data ~125

⇩

221

50    55    5

Target graph → Preprocessing module → Graph inference module → Inference result

Fig. 8

Start

S101 — Acquire plurality of training graphs

S102 — Perform machine learning for inference models using plurality of training graphs

S103 — Store machine learning result

End

# Fig. 9

```
        ┌─────────────┐
        │    Start     │
        └──────┬──────┘
               │
               ▼
S201   ┌──────────────────────────────────┐
       │       Acquire target graph       │
       └──────────────┬───────────────────┘
                      │
                      ▼
S202   ┌──────────────────────────────────┐
       │ Infer solution to task for target│
       │  graph using trained inference   │
       │             model                │
       └──────────────┬───────────────────┘
                      │
                      ▼
S203   ┌──────────────────────────────────┐
       │ Output information regarding      │
       │        inference result          │
       └──────────────┬───────────────────┘
                      │
                      ▼
        ┌─────────────┐
        │     End      │
        └─────────────┘
```

# Fig. 10

Fig. 11

Fig. 12

Fig. 13

Fig. 14

## Fig. 15

## Fig. 16

Fig. 17

Fig. 18

Fig. 19A

Fig. 19B

Fig. 19C

Fig. 19D

Fig. 20A

Fig. 20B

Fig. 20C

Fig. 20D

## INTERNATIONAL SEARCH REPORT

| International application No. |
|---|
| **PCT/JP2022/047490** |

**A. CLASSIFICATION OF SUBJECT MATTER**

*G06N 3/09*(2023.01)i; *G06N 3/04*(2023.01)i
FI:   G06N3/09; G06N3/04 100

According to International Patent Classification (IPC) or to both national classification and IPC

**B. FIELDS SEARCHED**

Minimum documentation searched (classification system followed by classification symbols)

G06N3/00-99/00; G06F16/00-16/958; G06Q10/00-10/30; G06Q30/00-30/08; G06Q50/00-99/00; G06T7/00-7/90; G06V10/00-20/90; G06V40/16; G06V40/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | FU, Kexue et al. Robust Point Cloud Registration Framework Based on Deep Graph Matching. arXiv.org [online]. arXiv:2103.04256v1. CORNELL UNIVERSITY. 2021, pp. 1-11, [retrieval date 02 March 2023], internet:<URL: https://arxiv.org/abs/2103.04256v1> <DOI: 10.48550/ARXIV.2103.04256> chapters 3-4, fig. 2 | 1-15 |
| A | US 2021/0232918 A1 (NEC LABORATORIES AMERICA, INC.) 29 July 2021 (2021-07-29) paragraphs [0002]-[0025], fig. 1-2 | 1-15 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 March 2023** | **14 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/047490**

| Patent document cited in search report | Publication date (day/month/year) | Patent family member(s) | Publication date (day/month/year) |
|---|---|---|---|
| US 2021/0232918 A1 | 29 July 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVID GALE ; LLOYD S SHAPLEY.** College admissions and the stability of marriage. *The American Mathematical Monthly,* 1962, vol. 69 (1), 9-15
- Deep Learning for Two-Sided Matching Markets. **SHIRA LI.** PhD thesis. Harvard University, 2019
- **SHUSAKU SONE ; ATSUSHI HASHIMOTO ; JIAXIN MA ; RINTARO YANAGI ; NAOYA CHIBA ; YOSHITAKA USHIKU.** *WeaveNet: A Differentiable Solver for Non-linear Assignment Problems,* 11 January 2022, https://openreview.net/forum?id=ktHKpsb-sxx>
- **JIAMING SUN ; ZEHONG SHEN ; YUANG WANG ; HUJUN BAO ; XIAOWEI ZHOU.** *LoFTR: Detector-Free Local Feature Matching with Transformers,* 11 January 2022, https://arxiv.org/abs/2104.00680>
- **GUL VAROL ; JAVIER ROMERO ; XAVIER MARTIN ; NAUREEN MAHMOOD ; MICHAEL J. BLACK ; IVAN LAPTEV ; CORDELIA SCHMID.** *Learning from Synthetic Humans,* 11 January 2022, https://arxiv.org/abs/1701.01370>
- **BO LI et al.** *A comparison of 3D shape retrieval methods based on a large-scale benchmark supporting multimodal queries,* 11 January 2022, https://userweb.cs.txstate.edu/~burtscher/papers/cviu15.pdf>
- **YIMING ZENG ; YUE QIAN ; ZHIYU ZHU ; JUNHUI HOU ; HUI YUAN ; YING HE.** *CorrNet3D: Unsupervised end-to-end learning of dense correspondence for 3D point clouds,* 11 January 2022, https://arxiv.org/abs/2012.15638>